# EUROPEAN PATENT APPLICATION

(11) **EP 4 769 101 A1**
(43) Date of publication of application: **01.07.2026**
(21) Application number: 24915981.5
(22) Date of filing: 10.01.2024
(51) Int. Cl.: G06F 3/04842, G06Q 10/10

(54) **SCHEDULE DISPLAY METHOD AND ELECTRONIC DEVICE**

(71) Applicant: Honor Device Co., Ltd., Shenzhen 518040 (CN)
(72) Inventor: CUI, Xiaolei, Shenzhen, Guangdong 518040 (CN); LIU, Shicong, Shenzhen, Guangdong 518040 (CN); WANG, Lei, Shenzhen, Guangdong 518040 (CN)
(74) Representative: MERH-IP Matias Erny Reichl Hoffmann Patentanwälte PartG mbB
(86) International application number: PCT/CN2024/071593
(87) International publication number: WO 2025/147903

(57) **Abstract**

This application provides a schedule display method and an electronic device, and relates to the field of electronic devices, so as to optimize a process in which the electronic device displays a schedule created by a user, thereby improving user experience. The method includes: A first interface is displayed, where the first interface includes an important reminder area and a travel arrangement area, the important reminder area is used to display a plurality of reminder cards, the plurality of reminder cards include a schedule conflict reminder card, and the travel arrangement area is used to display schedule information of a plurality of schedules created by a user. A first operation performed by the user on the schedule conflict reminder card is received. Schedule information of a first group of conflicting schedules is displayed in the travel arrangement area or the important reminder area in a first display manner in response to the first operation.

## Description

### TECHNICAL FIELD

This application relates to the field of electronic devices, and in particular, to a schedule display method and an electronic device.

### BACKGROUND

As the pace of people's lives gradually accelerates, there are also more various to-do items. To rationally plan a to-do item and be able to remind a user in a timely manner before the to-do item starts, an electronic device generally has a schedule management application, such as a calendar application, that is available for the user to create and manage a to-do or schedule. For example, after determining schedule information of a specific schedule, the user may open the schedule management application of the electronic device, and create a corresponding schedule or to-do in the schedule management application, so that the electronic device can remind the user (for example, a ringtone reminder, a vibration reminder, or an interface reminder) at a specified time point based on schedule information of the schedule or to-do.

After the user may create one or more schedules by using the schedule management application, the electronic device may display the schedules created by the user, so as to help the user view the schedules.

### SUMMARY

Embodiments of this application provide a schedule display method and an electronic device, so as to optimize a process in which the electronic device displays a schedule created by a user, thereby improving user experience.

To achieve the foregoing objective, the following technical solutions are used in the embodiments of this application.

In some examples, there may be a conflict (for example, a time conflict and a place conflict) between schedules created by the user. When the electronic device displays the schedules created by the user, the electronic device may display a conflict mark on a conflicting schedule to prompt the user. However, when there are a plurality of conflicting schedules, the electronic device may display a conflict mark on each of the plurality of conflicting schedules. Because the conflict mark displayed by the electronic device does not distinguish which schedules conflict with each other, and consequently the user cannot learn, based on the conflict mark, which schedules conflict with each other, thereby degrading user experience.

According to a first aspect, an embodiment of this application provides a schedule display method, which is applied to an electronic device. The schedule display method may include: A first interface is displayed, where the first interface includes an important reminder area and a travel arrangement area, the important reminder area is used to display a plurality of reminder cards, the plurality of reminder cards include a schedule conflict reminder card, and the travel arrangement area is used to display schedule information of a plurality of schedules created by a user. A first operation performed by the user on the schedule conflict reminder card is received. Schedule information of a first group of conflicting schedules is displayed in the travel arrangement area or the important reminder area in a first display manner in response to the first operation.

Based on the schedule display method according to the first aspect, when a conflicting schedule exists in the schedules created by the user, the electronic device may display a schedule conflict reminder card in the important reminder area, so as to remind the user that a conflicting schedule exists in the created schedules. In addition, when receiving the first operation performed by the user on the schedule conflict reminder card, the electronic device may display the schedule information of the first group of conflicting schedules in the travel arrangement area or the important reminder area in the first display manner. In this way, when a plurality of groups of conflicting schedules exist in the schedules created by the user, the electronic device may display the schedule information of the first group of conflicting schedules in the travel arrangement area or the important reminder area in the first display manner, so that the user can quickly determine the first group of conflicting schedules, thereby avoiding a case that the user cannot learn which schedules conflict with each other, and improving user experience.

With reference to the first aspect, in another possible implementation, the foregoing schedule conflict reminder card may include a view control, and the foregoing schedule display method may further include: A second operation performed by the user on the view control is received. Schedule information of a second group of conflicting schedules is displayed in the travel arrangement area in a second display manner in response to the second operation.

Based on this possible implementation, the electronic device can display the schedule information of the second group of conflicting schedules in the travel arrangement area in the second display manner, so that the user can quickly determine the second group of conflicting schedules, thereby avoiding a case that the user cannot learn which schedules conflict with each other, and improving user experience.

With reference to the first aspect, in another possible implementation, card priorities of the foregoing plurality of reminder cards are different, and when the plurality of reminder cards are displayed in the important reminder area, the plurality of reminder cards are sequentially displayed in an order of the card priorities of the plurality of reminder cards.

Based on this possible implementation, because the electronic device can sequentially display different cards in the important reminder area in the order of the card priorities of the plurality of reminder cards, it can be ensured that the user views a reminder card with a high priority in a timely manner.

With reference to the first aspect, in another possible implementation, before the first interface is displayed, the foregoing schedule display method may further include: A first reminder card is displayed in the important reminder area, where a card priority of the first reminder card is higher than a card priority of the schedule conflict reminder card. A third operation of the user in the important reminder area is received. The schedule conflict reminder card is displayed in the important reminder area in response to the third operation.

Based on this possible implementation, when the electronic device displays different reminder cards in the important reminder area, the electronic device may first display a reminder card with a high priority, and then, when receiving a trigger operation (for example, a leftward sliding operation) of the user in the important reminder area, the electronic device may display a reminder card with a low priority in the important reminder area. This can ensure that the user can view different reminder cards in the important reminder area.

With reference to the first aspect, in another possible implementation, the foregoing plurality of reminder cards may further include a departure reminder card, a tomorrow's schedule reminder card, a weather reminder card, an important day reminder card, and a birthday reminder card. Initial card priorities of the foregoing plurality of reminder cards in descending order are sequentially as follows: the departure reminder card, the schedule conflict reminder card, the birthday reminder card, the important day reminder card, the tomorrow's schedule reminder card, and the weather reminder card.

Based on this possible implementation, the electronic device may further display the departure reminder card, the tomorrow's schedule reminder card, the weather reminder card, the important day reminder card, and the birthday reminder card in the important reminder area, so as to provide different reminders for the user. In addition, the electronic device can sequentially display different cards in the important reminder area in the order of the card priorities of the plurality of reminder cards, and therefore it can be ensured that the user views a reminder card with a high priority in a timely manner.

With reference to the first aspect, in another possible implementation, the foregoing first group of conflicting schedules may include a first conflicting schedule, and the foregoing schedule display method may further include: A fourth operation performed by the user on the first conflicting schedule is received. A plurality of schedule priority options corresponding to the first conflicting schedule are displayed in response to the fourth operation, where the plurality of schedule priority options include an important level option, an ordinary level option, and an ignore level option. A fifth operation performed by the user on a first schedule priority option is received, where the first schedule priority option is any option in the plurality of schedule priority options. A schedule priority of the first conflicting schedule is adjusted to a schedule priority corresponding to the first schedule priority option in response to the fifth operation.

Based on this possible implementation, when receiving triggering (for example, leftward sliding) performed by the user on the first conflicting schedule, the electronic device may display a priority option of the first conflicting schedule, so that the user can adjust a priority of the first conflicting schedule. This can reduce an operation of the user when adjusting the priority of the first conflicting schedule, thereby improving user experience.

With reference to the first aspect, in another possible implementation, the foregoing schedule conflict reminder card may include a first schedule conflict reminder card, the first schedule conflict reminder card is used to display schedule information of the first conflicting schedule in the first group of conflicting schedules, and the first schedule conflict reminder card includes a schedule priority adjustment control. The foregoing schedule display method may further include: A sixth operation performed by the user on the schedule priority adjustment control is received. A plurality of schedule priority options corresponding to the first conflicting schedule are displayed in response to the sixth operation, where the plurality of schedule priority options include an important level option, an ordinary level option, and an ignore level option. A seventh operation performed by the user on a first schedule priority option is received, where the first schedule priority option is any option in the plurality of schedule priority options. A schedule priority of the first conflicting schedule is adjusted to a schedule priority corresponding to the first schedule priority option in response to the seventh operation.

Based on this possible implementation, each schedule conflict reminder card may include schedule information of one conflicting schedule in one group of conflicting schedules, and each schedule conflict reminder card includes a priority adjustment control, so that the user can adjust a priority of each conflicting schedule. This can reduce an operation of the user when adjusting the priority of the conflicting schedule, thereby improving user experience.

With reference to the first aspect, in another possible implementation, the foregoing schedule conflict reminder card may further include a second schedule conflict reminder card, and the second schedule conflict reminder card is used to display schedule information of the second conflicting schedule in the first group of conflicting schedules. The foregoing schedule display method may further include: When the first schedule conflict reminder card is displayed in the important reminder area, an eighth operation of the user in the important reminder area is received. The second schedule conflict reminder card is displayed in the important reminder area in response to the eighth operation.

Based on this possible implementation, when the electronic device displays different schedule conflict reminder cards in the important reminder area, the electronic device may first display a schedule conflict reminder card, and then, when receiving a trigger operation (for example, a leftward sliding operation) of the user in the important reminder area, the electronic device may display a second schedule conflict reminder card in the important reminder area. This can ensure that the user can view different schedule conflict reminder cards in the important reminder area.

With reference to the first aspect, in another possible implementation, the foregoing schedule display method may further include: When a schedule of a first schedule priority is displayed in the travel arrangement area, a ninth operation of the user in the travel arrangement area is received. A schedule of a second schedule priority is displayed in the travel arrangement area in response to the ninth operation, where the first schedule priority is different from the second schedule priority.

Based on this possible implementation, the electronic device may display schedules of different schedule priorities in the travel arrangement area, so as to help the user view, in the travel arrangement area, the schedules corresponding to different schedule priorities.

With reference to the first aspect, in another possible implementation, the foregoing first schedule priority is any one of an important level, an ordinary level, or an ignore level, and the second schedule priority is any one of the important level, the ordinary level, or the ignore level.

Based on this possible implementation, the electronic device may display schedules of different schedule priorities in the travel arrangement area, that is, schedules of the important level, schedules of the ordinary level, or schedules of the ignore level, so as to help the user view, in the travel arrangement area, the schedules corresponding to different schedule priorities.

With reference to the first aspect, in another possible implementation, the foregoing schedule of the first schedule priority includes a first schedule, and the foregoing schedule display method may further include: When the schedule of the first schedule priority is displayed in the travel arrangement area, a tenth operation performed by the user on the first schedule is received. A schedule priority of the first schedule is adjusted to the second schedule priority in response to the tenth operation, and the schedule of the second schedule priority is displayed in the travel arrangement area, where the schedule of the second schedule priority includes the first schedule.

Based on this possible implementation, when the electronic device may display schedules of different schedule priorities in the travel arrangement area, the electronic device may receive a trigger operation (for example, a drag operation) performed by the user on a specific schedule, so that a schedule priority of the schedule can be adjusted. This can reduce an operation of the user when adjusting the priority of the conflicting schedule, thereby improving user experience.

With reference to the first aspect, in another possible implementation, the foregoing travel arrangement area may include a completion control and a non-completion control, and the foregoing schedule display method may further include: When schedule information of a completed schedule is displayed in the travel arrangement area, an eleventh operation performed by the user on the non-completion control is received. Schedule information of a non-completed schedule is displayed in the travel arrangement area in response to the eleventh operation. A twelfth operation performed by the user on the completion control is received. The schedule information of the completed schedule is displayed in the travel arrangement area in response to the twelfth operation.

Based on this possible implementation, the electronic device may display completed schedules and non-completed schedules by category in the travel arrangement area, and the user may trigger, by using the completion control or the non-completion control, the electronic device to display the completed schedules or the non-completed schedules in the travel arrangement area. This can help the user view the completed schedules and the non-completed schedules by category, thereby improving user experience.

With reference to the first aspect, in another possible implementation, the displaying a first interface may include: A second interface of a schedule management application is displayed, where the second interface includes a first control. A thirteenth operation performed by the user on the first control is received. The first interface is displayed in response to the thirteenth operation.

Based on this possible implementation, the electronic device may enter the first interface by using the first control (for example, a my day control) in the schedule management application, so that the electronic device can display a schedule conflict reminder card in the important reminder area, so as to remind the user that a conflicting schedule exists in the created schedules. In addition, when receiving the first operation performed by the user on the schedule conflict reminder card, the electronic device may display the schedule information of the first group of conflicting schedules in the travel arrangement area or the important reminder area in the first display manner.

With reference to the first aspect, in another possible implementation, the displaying a first interface may include: A third interface is displayed, where the third interface includes a schedule reminder card. A fourteenth operation performed by the user on the schedule reminder card is received. The first interface is displayed in response to the fourteenth operation.

Based on this possible implementation, the electronic device may enter the first interface by using a schedule reminder card in another interface (for example, a home screen), so that the electronic device can display a schedule conflict reminder card in the important reminder area, so as to remind the user that a conflicting schedule exists in the created schedules. In addition, when receiving the first operation performed by the user on the schedule conflict reminder card, the electronic device may display the schedule information of the first group of conflicting schedules in the travel arrangement area or the important reminder area in the first display manner.

With reference to the first aspect, in another possible implementation, the foregoing first interface may include a first date control and a second date control, and the foregoing schedule display method may further include: When the first interface displays schedule information corresponding to a first date, a fifteenth operation performed by the user on the second date control is received. Schedule information corresponding to a second date is displayed in response to the fifteenth operation. When the first interface displays the schedule information corresponding to the second date, a sixteenth operation performed by the user on the second date control is received. The schedule information corresponding to the first date is displayed in response to the sixteenth operation.

Based on this possible implementation, after the electronic device may enter the first interface by using a schedule reminder card in another interface (for example, a home screen), the user may also trigger, by using the first date control and the second date control in the first interface, the electronic device to switch to display the schedule information corresponding to the first date and the schedule information corresponding to the second date.

According to a second aspect, an embodiment of this application provides an electronic device, where the electronic device includes a processor and a memory configured to store instructions executable by the processor. When the processor is configured to execute the instructions, the electronic device is enabled to implement the following operations: A first interface is displayed, where the first interface includes an important reminder area and a travel arrangement area, the important reminder area is used to display a plurality of reminder cards, the plurality of reminder cards include a schedule conflict reminder card, and the travel arrangement area is used to display schedule information of a plurality of schedules created by a user. A first operation performed by the user on the schedule conflict reminder card is received. Schedule information of a first group of conflicting schedules is displayed in the travel arrangement area or the important reminder area in a first display manner in response to the first operation.

With reference to the second aspect, in another possible implementation, the foregoing schedule conflict reminder card includes a view control, and when the foregoing processor is configured to execute the instructions, the electronic device is enabled to further implement the following operations: A second operation performed by the user on the view control is received. Schedule information of a second group of conflicting schedules is displayed in the travel arrangement area in a second display manner in response to the second operation.

With reference to the second aspect, in another possible implementation, card priorities of the foregoing plurality of reminder cards are different, and when the plurality of reminder cards are displayed in the important reminder area, the plurality of reminder cards are sequentially displayed in an order of the card priorities of the plurality of reminder cards.

With reference to the second aspect, in another possible implementation, before the first interface is displayed, when the foregoing processor is configured to execute the instructions, the electronic device is enabled to further implement the following operations: A first reminder card is displayed in the important reminder area, where a card priority of the first reminder card is higher than a card priority of the schedule conflict reminder card. A third operation of the user in the important reminder area is received. The schedule conflict reminder card is displayed in the important reminder area in response to the third operation.

With reference to the second aspect, in another possible implementation, the foregoing plurality of reminder cards further includes a departure reminder card, a tomorrow's schedule reminder card, a weather reminder card, an important day reminder card, and a birthday reminder card. Initial card priorities of the plurality of reminder cards in descending order are sequentially as follows: the departure reminder card, the schedule conflict reminder card, the birthday reminder card, the important day reminder card, the tomorrow's schedule reminder card, and the weather reminder card.

With reference to the second aspect, in another possible implementation, the first group of conflicting schedules includes a first conflicting schedule, and when the foregoing processor is configured to execute the instructions, the electronic device is enabled to further implement the following operations: A fourth operation performed by the user on the first conflicting schedule is received. A plurality of schedule priority options corresponding to the first conflicting schedule are displayed in response to the fourth operation, where the plurality of schedule priority options include an important level option, an ordinary level option, and an ignore level option. A fifth operation performed by the user on a first schedule priority option is received, where the first schedule priority option is any option in the plurality of schedule priority options. A schedule priority of the first conflicting schedule is adjusted to a schedule priority corresponding to the first schedule priority option in response to the fifth operation.

With reference to the second aspect, in another possible implementation, the foregoing schedule conflict reminder card includes a first schedule conflict reminder card, the first schedule conflict reminder card is used to display schedule information of the first conflicting schedule in the first group of conflicting schedules, and the first schedule conflict reminder card includes a schedule priority adjustment control. When the foregoing processor is configured to execute the instructions, the electronic device is enabled to further implement the following operations: A sixth operation performed by the user on the schedule priority adjustment control is received. A plurality of schedule priority options corresponding to the first conflicting schedule are displayed in response to the sixth operation, where the plurality of schedule priority options include an important level option, an ordinary level option, and an ignore level option. A seventh operation performed by the user on a first schedule priority option is received, where the first schedule priority option is any option in the plurality of schedule priority options. A schedule priority of the first conflicting schedule is adjusted to a schedule priority corresponding to the first schedule priority option in response to the seventh operation.

With reference to the second aspect, in another possible implementation, the foregoing schedule conflict reminder card further includes a second schedule conflict reminder card, and the second schedule conflict reminder card is used to display schedule information of the second conflicting schedule in the first group of conflicting schedules. When the foregoing processor is configured to execute the instructions, the electronic device is enabled to further implement the following operations: When the first schedule conflict reminder card is displayed in the important reminder area, an eighth operation of the user in the important reminder area is received. The second schedule conflict reminder card is displayed in the important reminder area in response to the eighth operation.

With reference to the second aspect, in another possible implementation, when the foregoing processor is configured to execute the instructions, the electronic device is enabled to further implement the following operations: When schedule information of a schedule of a first schedule priority is displayed in the travel arrangement area, a ninth operation of the user in the travel arrangement area is received. Schedule information of a schedule of a second schedule priority is displayed in the travel arrangement area in response to the ninth operation, where the first schedule priority is different from the second schedule priority.

With reference to the second aspect, in another possible implementation, the foregoing first schedule priority is any one of an important level, an ordinary level, or an ignore level, and the second schedule priority is any one of the important level, the ordinary level, or the ignore level.

With reference to the second aspect, in another possible implementation, the foregoing schedule of the first schedule priority includes a first schedule, and when the foregoing processor is configured to execute the instructions, the electronic device is enabled to further implement the following operations: When the schedule information of the schedule of the first schedule priority is displayed in the travel arrangement area, a tenth operation performed by the user on the first schedule is received. A schedule priority of the first schedule is adjusted to the second schedule priority in response to the tenth operation, and the schedule information of the schedule of the second schedule priority is displayed in the travel arrangement area, where the schedule information of the schedule of the second schedule priority includes the schedule information of the first schedule.

With reference to the second aspect, in another possible implementation, the foregoing travel arrangement area includes a completion control and a non-completion control, and when the foregoing processor is configured to execute the instructions, the electronic device is enabled to further implement the following operations: When schedule information of a completed schedule is displayed in the travel arrangement area, an eleventh operation performed by the user on the non-completion control is received. Schedule information of a non-completed schedule is displayed in the travel arrangement area in response to the eleventh operation. A twelfth operation performed by the user on the completion control is received. The schedule information of the completed schedule is displayed in the travel arrangement area in response to the twelfth operation.

With reference to the second aspect, in another possible implementation, when the foregoing processor is configured to execute the instructions, the electronic device is enabled to further implement the following operations: A second interface of a schedule management application is displayed, where the second interface includes a first control. A thirteenth operation performed by the user on the first control is received. The first interface is displayed in response to the thirteenth operation.

With reference to the second aspect, in another possible implementation, when the foregoing processor is configured to execute the instructions, the electronic device is enabled to further implement the following operations: A third interface is displayed, where the third interface includes a schedule reminder card. A fourteenth operation performed by the user on the schedule reminder card is received. The first interface is displayed in response to the fourteenth operation.

With reference to the second aspect, in another possible implementation, the foregoing first interface includes a first date control and a second date control, and when the foregoing processor is configured to execute the instructions, the electronic device is enabled to further implement the following operations: When the first interface displays schedule information corresponding to a first date, a fifteenth operation performed by the user on the second date control is received. Schedule information corresponding to a second date is displayed in response to the fifteenth operation. When the first interface displays the schedule information corresponding to the second date, a sixteenth operation performed by the user on the second date control is received. The schedule information corresponding to the first date is displayed in response to the sixteenth operation.

According to a third aspect, a schedule display device is provided. The schedule display device includes a processor and a memory. The memory is configured to store computer-executable instructions. When the schedule display device runs, the processor executes the computer-executable instructions stored in the memory, to enable the schedule display device to perform the schedule display method according to any implementation of the first aspect.

According to a fourth aspect, an embodiment of this application provides a computer-readable storage medium, where the computer-readable storage medium stores computer program instructions. When the computer program instructions are executed by an electronic device, the electronic device is enabled to implement the schedule display method according to any one of the first aspect or the possible implementations of the first aspect.

According to a fifth aspect, an embodiment of this application provides a computer program product. The computer program product includes computer-readable code. When the computer-readable code is run in an electronic device, the electronic device is enabled to implement the schedule display method according to any one of the first aspect or the possible implementations of the first aspect.

It should be understood that, for beneficial effects of the second aspect to the fifth aspect, refer to related descriptions in the first aspect. Details are not described herein again.

### BRIEF DESCRIPTION OF DRAWINGS

FIG. 1A to FIG. 1C are schematic diagrams 1 of an interface corresponding to a schedule management application of an electronic device in a conventional technology;
FIG. 2A to FIG. 2C are schematic diagrams 2 of an interface corresponding to a schedule management application of an electronic device in a conventional technology;
FIG. 3A and FIG. 3B are schematic diagrams 3 of an interface corresponding to a schedule management application of an electronic device in a conventional technology;
FIG. 4 is a schematic diagram of a hardware structure of an electronic device according to an embodiment of this application;
FIG. 5 is a schematic flowchart of a schedule display method according to an embodiment of this application;
FIG. 6A to FIG. 6E are schematic diagrams 1 of an interface corresponding to a schedule management application of an electronic device according to an embodiment of this application;
FIG. 7A to FIG. 7D are schematic diagrams 2 of an interface corresponding to a schedule management application of an electronic device according to an embodiment of this application;
FIG. 8A to FIG. 8C are schematic diagrams 3 of an interface corresponding to a schedule management application of an electronic device according to an embodiment of this application;
FIG. 9 is a schematic diagram 4 of an interface corresponding to a schedule management application of an electronic device according to an embodiment of this application;
FIG. 10A to FIG. 10D are schematic diagrams 5 of an interface corresponding to a schedule management application of an electronic device according to an embodiment of this application;
FIG. 11A to FIG. 11C are schematic diagrams 6 of an interface corresponding to a schedule management application of an electronic device according to an embodiment of this application;
FIG. 12A and FIG. 12B are schematic diagrams 7 of an interface corresponding to a schedule management application of an electronic device according to an embodiment of this application; and
FIG. 13A to FIG. 13C are schematic diagrams 8 of an interface corresponding to a schedule management application of an electronic device according to an embodiment of this application.

### DESCRIPTION OF EMBODIMENTS

The following clearly and completely describes the technical solutions in embodiments of this application with reference to the accompanying drawings in the embodiments of this application. Clearly, the described embodiments are merely some rather than all of the embodiments of this application. Based on the embodiments of this application, all other embodiments obtained by a person of ordinary skill in the art without creative efforts fall within the protection scope of this application.

Terms "first" and "second" are merely used for description purposes, and should not be understood as indicating or implying relative importance or implicitly indicating a quantity of technical features indicated. Therefore, a feature defined with "first" or "second" may explicitly or implicitly include one or more of such features. In the descriptions of this application, unless otherwise stated, "a plurality of" means two or more.

Terms used in the following embodiments of this application are merely intended to describe specific embodiments, but not intended to limit this application. As used in this specification and the claims of this application, singular expressions "one", "a", "the", "foregoing", and "this" are intended to include plural expressions, unless otherwise clearly specified in the context. It should be further understood that "/" represents a meaning of "or". For example, "A/B" may represent A or B. The term "and/or" in this specification describes only an association relationship for describing associated characters and represents that three relationships can exist. For example, "A and/or B" may represent the following three cases: Only A exists, both A and B exist, and only B exists.

As the pace of people's lives gradually accelerates, there are also more various to-do items. To rationally plan a to-do item and be able to obtain a timely reminder before the to-do item starts, an electronic device generally has a schedule management application, such as a calendar application, that is available for the user to create and manage a to-do or schedule. For example, after determining schedule information of a specific schedule (for example, a start time, an end time, a location, and a name of the schedule), the user may open the schedule management application of the electronic device, and create a corresponding schedule or to-do in the schedule management application, so that the electronic device can remind the user (for example, a ringtone reminder, a vibration reminder, or an interface reminder) at a specified time point based on schedule information of the schedule or to-do.

After the user may create one or more schedules by using the schedule management application (for example, a calendar application), the electronic device may display the schedules created by the user, so as to help the user view the schedules.

In some scenarios, there may be a conflict (for example, a time conflict and a place conflict) between schedules created by the user. When the electronic device displays the schedules created by the user, the electronic device may display a conflict mark on a conflicting schedule to prompt the user.

However, when there are a plurality of conflicting schedules, the electronic device may display a conflict mark on each of the plurality of conflicting schedules. Because the conflict mark displayed by the electronic device does not distinguish which schedules conflict with each other, and consequently the user cannot learn, based on the conflict mark, which schedules conflict with each other, thereby degrading user experience.

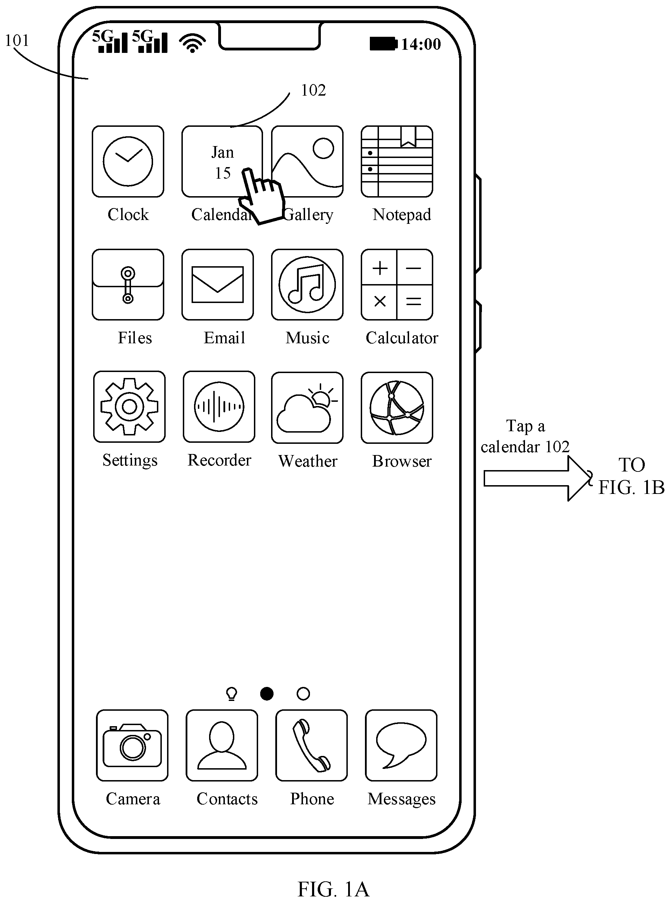

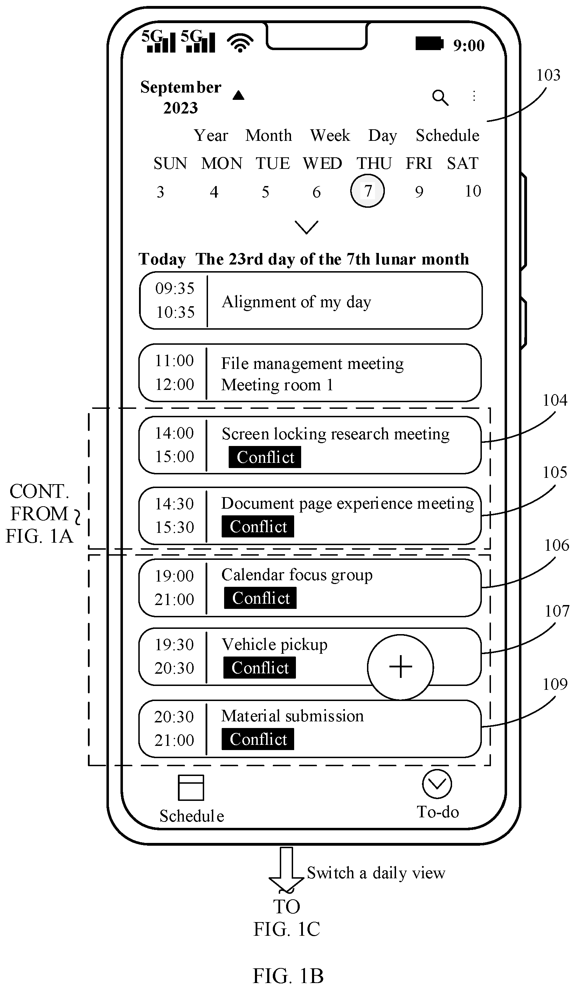

For example, the electronic device is a mobile phone, and the schedule management application is a calendar application. The user may create a plurality of schedules by using the calendar application. Then, as shown in FIG. 1A, a home screen 101 of the mobile phone may include a calendar application icon 102. When the mobile phone receives a trigger operation such as a tap operation performed by the user on the calendar application icon 102, as a response, as shown in FIG. 1B, the mobile phone may display an interface 103 corresponding to a current date. The interface 103 corresponding to the current date may include a plurality of schedules created by the user, for example, a screen locking research meeting schedule 104, a document page experience meeting schedule 105, a calendar focus group schedule 106, a vehicle pickup schedule 107, and a material submission schedule 108.

When the mobile phone displays, in the interface 103 corresponding to the current date, the plurality of schedules created by the user, the mobile phone may determine whether a conflicting schedule exists in the plurality of schedules created by the user, for example, whether there is a conflict with a time corresponding to each of the plurality of schedules. When the mobile phone determines that a conflicting schedule exists in the plurality of schedules created by the user, the mobile phone may display a conflict mark on the conflicting schedule to prompt the user.

With reference to FIG. 1B, because a time corresponding to the screen locking research meeting schedule 104 created by the user is 14:00 to 15:00 p.m., and a time corresponding to the document page experience meeting schedule 105 is 14:30 to 15:30 p.m., the mobile phone may determine that the screen locking research meeting schedule 104 and the document page experience meeting schedule 105 are conflicting schedules. The mobile phone may display a conflict mark in the screen locking research meeting schedule 104 and the document page experience meeting schedule 105 to prompt the user that the screen locking research meeting schedule 104 and the document page experience meeting schedule 105 are conflicting schedules.

With reference to FIG. 1B, a time corresponding to the calendar focus group schedule 106 is 19:00 to 21:00 p.m., a time corresponding to the vehicle pickup schedule 107 is 19:30 to 20:30 p.m., and a time corresponding to the material submission schedule 108 is 20:30 to 21:00 p.m. Therefore, the mobile phone may determine that the calendar focus group schedule 106, the vehicle pickup schedule 107, and the material submission schedule 108 are conflicting schedules. The mobile phone may display a conflict mark in the calendar focus group schedule 106, the vehicle pickup schedule 107, and the material submission schedule 108 to prompt the user that the calendar focus group schedule 106, the vehicle pickup schedule 107, and the material submission schedule 108 are conflicting schedules.

With reference to FIG. 1B, because the screen locking research meeting schedule 104 and the document page experience meeting schedule 105 are conflicting schedules, and the calendar focus group schedule 106, the vehicle pickup schedule 107, and the material submission schedule 108 are conflicting schedules, the mobile phone displays a conflict mark in each of the screen locking research meeting schedule 104, the document page experience meeting schedule 105, the calendar focus group schedule 106, the vehicle pickup schedule 107, and the material submission schedule 108.

As shown in FIG. 1B, the mobile phone displays a conflict mark in each of the screen locking research meeting schedule 104, the document page experience meeting schedule 105, the calendar focus group schedule 106, the vehicle pickup schedule 107, and the material submission schedule 108. In this way, the user sees that there is a conflict between the five schedules, and the user cannot directly see which schedules conflict with each other. For example, the user cannot directly see whether there is a conflict between the document page experience meeting schedule 105 and the calendar focus group schedule 106, causing relatively low user experience.

In some other scenarios, when the electronic device displays a schedule created by the user, the electronic device may also display a daily view interface corresponding to the schedule created by the user, so as to help the user view time information corresponding to the created schedule.

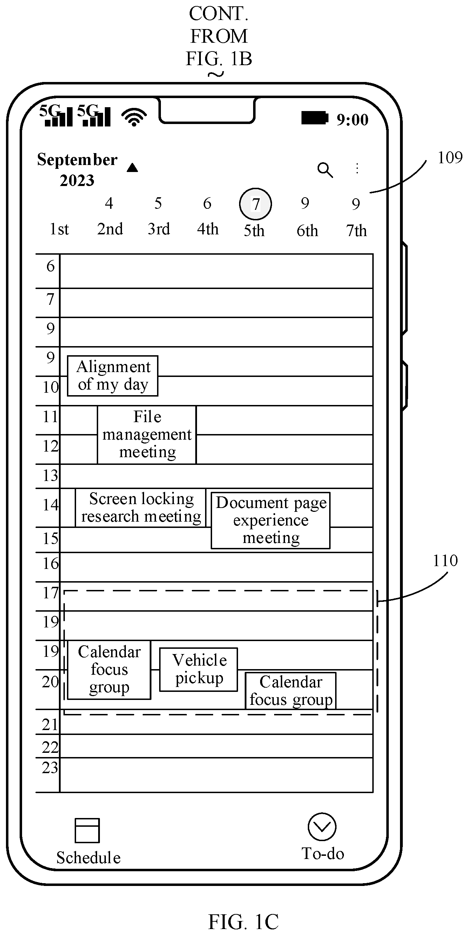

For example, still with reference to FIG. 1B, after the mobile phone displays the interface 103 corresponding to the current date, the mobile phone may receive a switching operation of the user for switching the daily view corresponding to the current date, for example, a tap operation performed by the user on the current date. As a response, as shown in FIG. 1C, the mobile phone may display a daily view interface 109 corresponding to the current date.

The daily view interface 109 corresponding to the current date may include timeline information corresponding to the current date, for example, a timeline corresponding to each hour from 0 o'clock to 24 o'clock. The daily view interface 109 corresponding to the current date may further include schedule information of a plurality of schedules corresponding to the current date, and the schedule information includes a schedule name corresponding to a schedule. Information about each schedule may be displayed at a corresponding location of a timeline in the daily view interface 109 based on a time of the schedule (namely, a start time and an end time of the schedule), so as to prompt the user of the time of the schedule.

As shown in FIG. 1C, the daily view interface 109 corresponding to the current date includes schedule information (namely, a screen locking research meeting) corresponding to the screen locking research meeting schedule, schedule information (namely, a document page experience meeting) corresponding to the document page experience meeting schedule, schedule information (namely, a calendar focus group) corresponding to the calendar focus group schedule, schedule information (namely, vehicle pickup) corresponding to the vehicle pickup schedule, and schedule information (namely, material submission) corresponding to the material submission schedule.

The schedule information in the daily view interface 109 corresponding to the current date includes only the schedule name corresponding to the schedule, and an amount of information is relatively small. Consequently, the user cannot clearly learn information such as a time or a place corresponding to each schedule, causing relatively low user experience.

In addition, when the times of the plurality of schedules are relatively close to each other or there is a conflict between the times of the plurality of schedules, schedule information of the plurality of schedules is distributed relatively densely in the daily view interface 109 corresponding to the current date. For example, with reference to FIG. 1C, an area 110 in the daily view interface 109 corresponding to the current date includes the schedule information (namely, the calendar focus group) corresponding to the calendar focus group schedule, the schedule information (namely, the vehicle pickup) corresponding to the vehicle pickup schedule, and the schedule information (namely, the material submission) corresponding to the material submission schedule. Because times of the three schedules are relatively close to each other and there is a conflict between the times of the three schedules, the schedule information of the three schedules is distributed densely in the area 110. Consequently, the user cannot clearly learn the time corresponding to each schedule, causing relatively low user experience.

In some other scenarios, when the electronic device displays a conflict mark on a conflicting schedule to prompt the user, the user may also adjust a priority of the conflicting schedule. Therefore, the electronic device may determine an important schedule in the conflicting schedules and an unimportant schedule in the conflicting schedules based on the adjusted priority. Further, the electronic device may cancel the conflict mark in the conflicting schedule, or the electronic device may remind the important schedule in the conflicting schedules, and may not remind the unimportant schedule in the conflicting schedules.

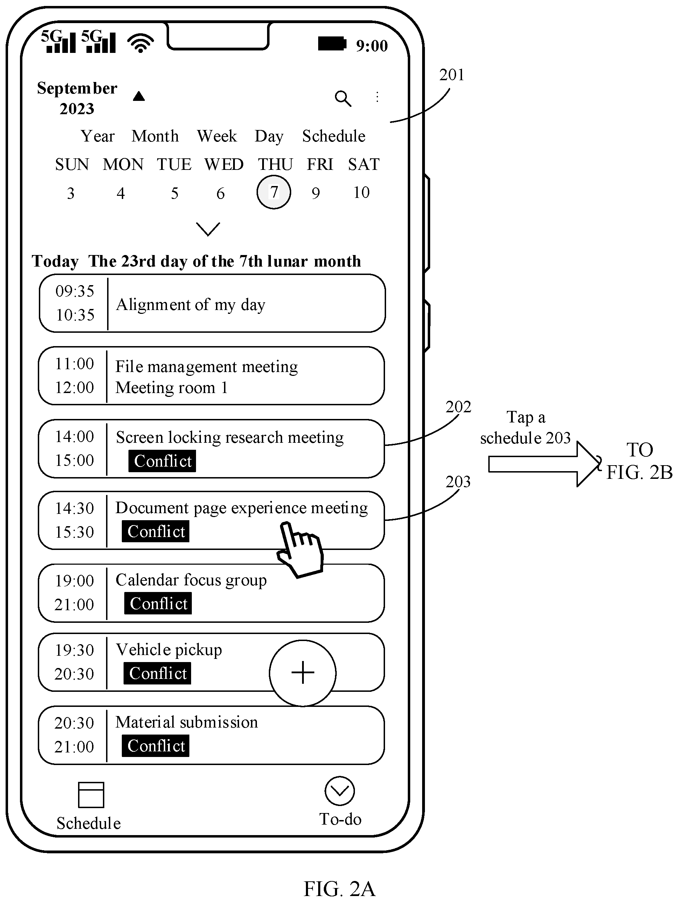

For example, again, the electronic device is a mobile phone, and the schedule management application is a calendar application. The user may create a plurality of schedules by using the calendar application. Then, with reference to FIG. 2A, the mobile phone may display an interface 201 corresponding to the current date. The interface 201 corresponding to the current date may include the plurality of schedules created by the user, for example, a screen locking research meeting schedule 204 and a document page experience meeting schedule 205.

Because a time corresponding to the screen locking research meeting schedule 202 created by the user is 14:00 to 15:00 p.m., and a time corresponding to the document page experience meeting schedule 203 is 14:30 to 15:30 p.m., the screen locking research meeting schedule 202 and the document page experience meeting schedule 203 are conflicting schedules. As shown in FIG. 2A, the mobile phone may display a conflict mark in the screen locking research meeting schedule 202 and the document page experience meeting schedule 203 to prompt the user that the screen locking research meeting schedule 202 and the document page experience meeting schedule 203 are conflicting schedules.

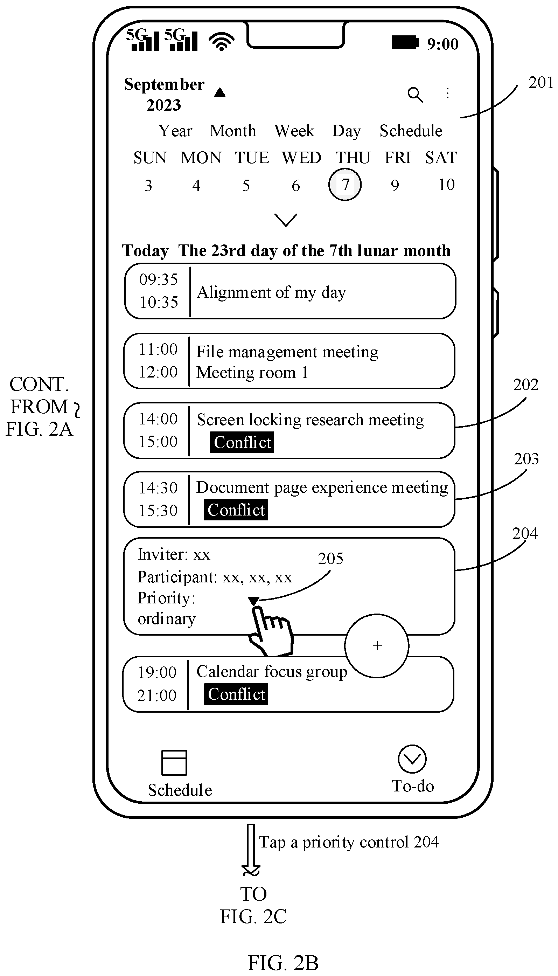

Then, when the mobile phone receives a trigger operation such as a tap operation performed by the user on the document page experience meeting schedule 203, as a response, as shown in FIG. 2B, the mobile phone may display a management pop-up window 204 corresponding to the document page experience meeting schedule 203. The management pop-up window 204 may include schedule information (for example, inviter information and participant information) corresponding to the document page experience meeting schedule 203. The management pop-up window 204 may further include a priority control 205.

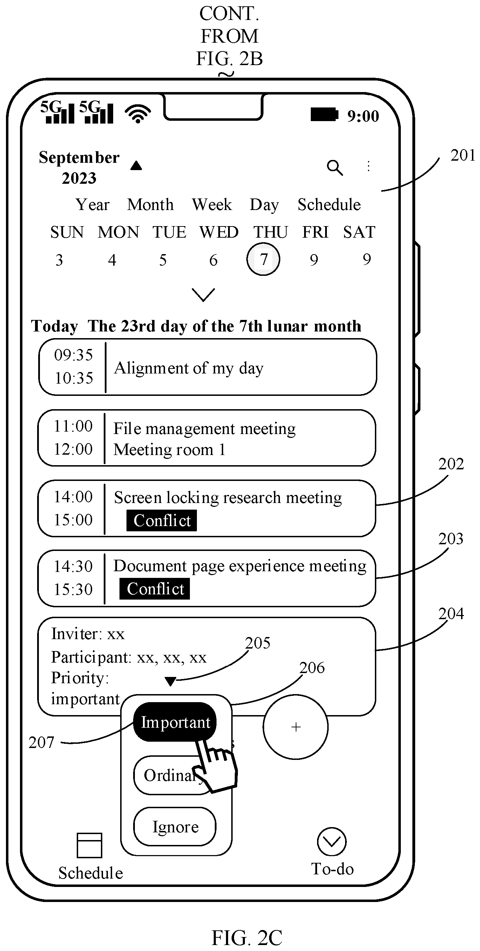

When the mobile phone receives a trigger operation such as a tap operation performed by the user on the priority control 205, as a response, as shown in FIG. 2C, the mobile phone may display a priority option 206. The priority option 206 may include an important option 207. When the mobile phone receives a trigger operation such as a tap operation performed by the user on the important option 207, the mobile phone may determine that a priority of the document page experience meeting schedule 203 is important. Then, the mobile phone may cancel the conflict marks in the screen locking research meeting schedule 202 and the document page experience meeting schedule 203. When the time corresponding to the document page experience meeting schedule 203 arrives, the mobile phone may remind the document page experience meeting schedule 203. When the time corresponding to the screen locking research meeting schedule 202 arrives, the mobile phone may not remind the screen locking research meeting schedule 202.

It can be learned from the foregoing process shown in FIG. 2A to FIG. 2C that, when adjusting a priority of a schedule, the user needs to perform a plurality of operations to adjust the priority corresponding to the schedule, causing relatively low user experience. To be specific, the user needs to perform a trigger operation on the schedule to display a management pop-up window corresponding to the schedule. Then, the user further needs to perform a trigger operation on a priority control in the management pop-up window corresponding to the schedule, so as to display a priority option corresponding to the schedule. Then, the user further needs to perform a trigger operation on the priority option to adjust the priority corresponding to the schedule.

In some other scenarios, after the user creates a schedule by using a schedule management application (for example, a calendar application) of the electronic device, the electronic device may display, based on a time corresponding to the schedule (for example, a start time of the schedule) created by the user, prompt information (for example, a banner notification) corresponding to the schedule, so as to prompt the user that the schedule is about to start.

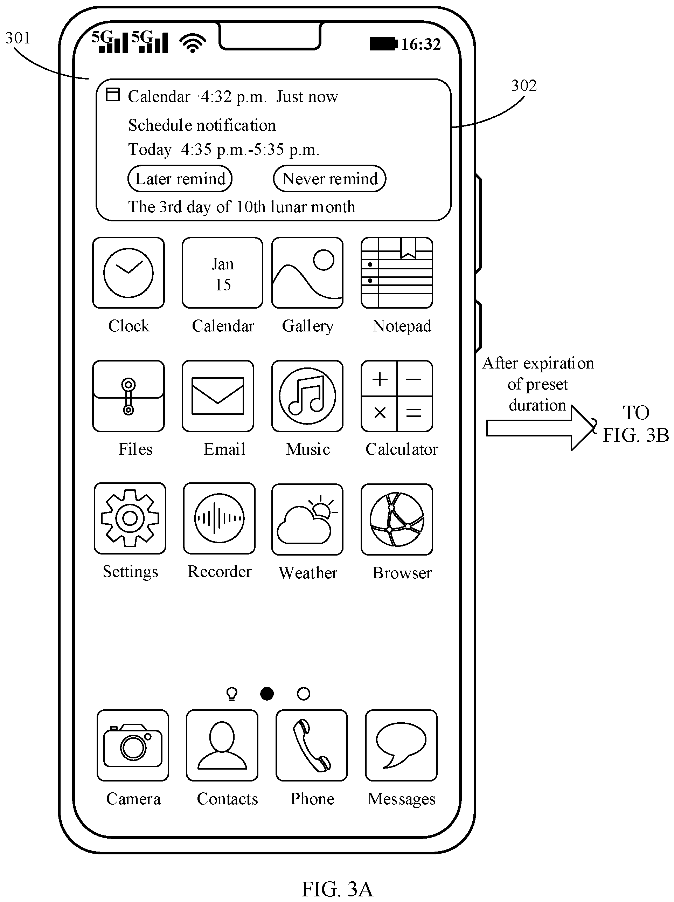

For example, again, the electronic device is a mobile phone, and the schedule management application is a calendar application. The user may create a schedule by using the calendar application and a start time corresponding to the schedule is 4:35 p.m. Then, when the start time corresponding to the schedule is about to arrive, as shown in FIG. 3A, the mobile phone may display prompt information 302 corresponding to the schedule on a home screen 301, so as to prompt the user that the schedule is about to start. The prompt information 302 may include prompt information such as the start time and the end time that correspond to the schedule.

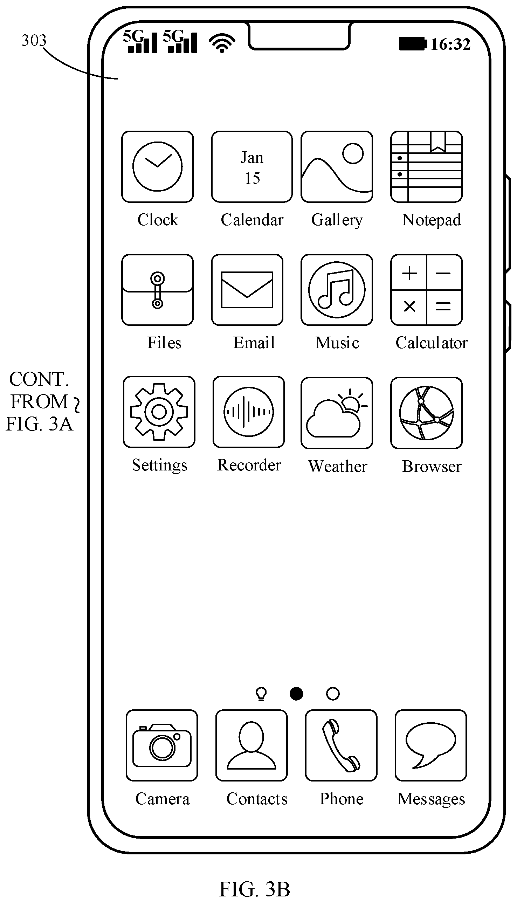

It should be noted that the prompt information 302 may further include a later remind control and a never remind control. When the mobile phone receives a trigger operation performed by the user on the later remind control, as a response, the mobile phone may not display the prompt information 302 on the home screen, and after expiration of preset duration, the mobile phone may display the prompt information 302 on the home screen again, so as to prompt the user that the schedule is about to start. When the mobile phone receives a trigger operation such as a tap operation performed by the user on the never remind control, as a response, as shown in FIG. 3B, the mobile phone may not display the prompt information 302 on the home screen.

After the mobile phone displays the prompt information 302 corresponding to the schedule on the home screen 301, if the mobile phone does not receive, within the preset duration, a trigger operation (for example, a trigger operation on the later remind control in the prompt information 302) performed by the user on the prompt information 302, as shown in FIG. 3B, the mobile phone may not display the prompt information 302 on the home screen 303.

It can be learned from the foregoing process that, after the mobile phone displays the prompt information 302 corresponding to the schedule on the home screen 301, the prompt information 302 is no longer displayed after expiration of the preset duration. As a result, the user cannot see the prompt information corresponding to the schedule in a timely manner, causing relatively low user experience.

To resolve the problem that the conflict mark displayed by the electronic device does not distinguish which schedules conflict with each other, an embodiment of this application provides a schedule display method, which is applied to the electronic device. The schedule display method may include: In response to an operation of a user or an input of another application, the electronic device creates a plurality of schedules by using a schedule management application (for example, a calendar application). Then, the electronic device may receive a first trigger operation of the user. The electronic device displays an interface corresponding to my day. The interface corresponding to my day includes an important reminder area and a travel arrangement area. The important reminder area is used to display a plurality of reminder cards, the plurality of reminder cards may include a schedule conflict reminder card, and the travel arrangement area may be used to display schedule information of a plurality of schedules created by the user.

In the solution of this application, when there is a conflict between the schedules created by the user, a schedule conflict reminder card is displayed in the important reminder area of the electronic device, so as to remind the user that a conflicting schedule exists in the created schedules. In addition, when responding to the operation performed by the user on the schedule conflict reminder card, the electronic device may display schedule information of a first group of conflicting schedules in the travel arrangement area or the important reminder area in a first display manner. In this way, when a plurality of groups of conflicting schedules exist in the schedules created by the user, the electronic device may display schedule information of the conflicting schedules by group in the travel arrangement area or the important reminder area, so that the user can clearly distinguish various groups of conflicting schedules, thereby avoiding a case that the user cannot distinguish which schedules conflict with each other, and improving user experience.

The following describes the schedule display method provided in the embodiments of this application.

The schedule display method provided in the embodiments of this application may be applied to the foregoing electronic device. In some embodiments, the foregoing electronic device may be an electronic device having a schedule management application (such as a calendar application), for example, a mobile phone, a tablet computer, a handheld computer, a personal computer (personal computer, PC), a cellular phone, or a personal digital assistant (personal digital assistant, PDA). A specific form of the electronic device is not limited herein in the embodiments of this application.

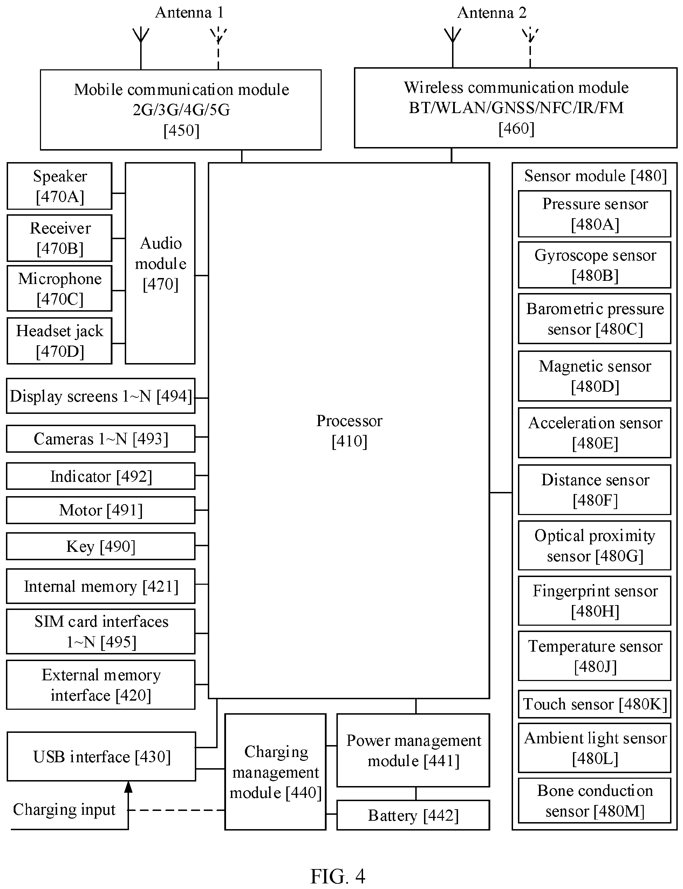

For example, the electronic device is the mobile phone. FIG. 4 is a schematic diagram of a structure of an electronic device according to an embodiment of this application.

As shown in FIG. 4, the electronic device may include a processor 410, an external memory interface 420, an internal memory 421, a universal serial bus (universal serial bus, USB) interface 430, a charging management module 440, a power management module 441, a battery 442, an antenna 1, an antenna 2, a mobile communication module 450, a wireless communication module 460, an audio module 470, a speaker 470A, a receiver 470B, a microphone 470C, a headset jack 470D, a sensor module 480, a key 490, a motor 491, an indicator 492, a camera 493, a display screen 494, a subscriber identification module (subscriber identification module, SIM) card interface 495, and the like. The sensor module 480 may include a pressure sensor 480A, a gyroscope sensor 480B, a barometric pressure sensor 480C, a magnetic sensor 480D, an acceleration sensor 480E, a distance sensor 480F, an optical proximity sensor 480G, a fingerprint sensor 480H, a temperature sensor 980J, a touch sensor 480K, an ambient light sensor 980L, a bone conduction sensor 480M, and the like.

It may be understood that the structure shown in this embodiment does not constitute a specific limitation on the electronic device. In some other embodiments, the electronic device may include more or fewer components than those shown in the figure, or combine some components, or split some components, or have different component arrangements. The components shown in the figure may be implemented by hardware, software, or a combination of software and hardware.

The processor 410 may include one or more processing units. For example, the processor 410 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent devices, or may be integrated into one or more processors.

The controller may be a nerve center and a command center of the electronic device. The controller may generate an operation control signal based on instruction operation code and a timing signal, to complete control of instruction fetching and instruction execution.

A memory may be further disposed in the processor 410, and is configured to store instructions and data. In some embodiments, the memory in the processor 410 is a cache. The memory may store instructions or data just used or cyclically used by the processor 410. If the processor 410 needs to use the instructions or the data again, the processor may directly invoke the instructions or the data from the memory. This avoids repeated access and shortens a waiting time of the processor 410, thereby improving system efficiency.

In some embodiments, the processor 410 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

A wireless communication function of the electronic device may be implemented by using the antenna 1, the antenna 2, the mobile communication module 450, the wireless communication module 460, the modem processor, the baseband processor, and the like.

The antenna 1 and the antenna 2 are configured to transmit and receive electromagnetic wave signals. Each antenna in the electronic device may be configured to cover one or more communication frequency bands. Different antennas may be further multiplexed to improve antenna utilization. For example, the antenna 1 may be multiplexed as a diversity antenna of a wireless local area network. In some other embodiments, the antenna may be used together with a tuning switch.

The mobile communication module 450 may provide a solution for wireless communication that is applied to the electronic device and that includes 2G/3G/4G/5G and the like. The mobile communication module 450 may include at least one filter, a switch, a power amplifier, a low noise amplifier (low noise amplifier, LNA), and the like. The mobile communication module 450 may receive an electromagnetic wave by using the antenna 1, perform processing such as filtering and amplification on the received electromagnetic wave, and then transmit a processed electromagnetic wave to the modem processor for demodulation. The mobile communication module 450 may further amplify a signal modulated by the modem processor, and convert, by using the antenna 1, the signal into an electromagnetic wave for radiation. In some embodiments, at least some functional modules of the mobile communication module 450 may be disposed in the processor 410. In some embodiments, at least some functional modules of the mobile communication module 450 may be disposed in a same device as at least some modules of the processor 410.

The wireless communication module 460 may provide a solution for wireless communication that is applied to the electronic device and that includes a wireless local area network (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communication module 460 may be one or more devices integrating at least one communication processing module. The wireless communication module 460 receives an electromagnetic wave by using the antenna 2, performs frequency modulation and filtering processing on an electromagnetic wave signal, and sends a processed signal to the processor 410. The wireless communication module 460 may further receive a to-be-sent signal from the processor 410, perform frequency modulation and amplification on the signal, and convert, by using the antenna 2, the signal into an electromagnetic wave for radiation.

In some embodiments, in the electronic device, the antenna 1 and the mobile communication module 450 are coupled, and the antenna 2 and the wireless communication module 460 are coupled, so that the electronic device can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like.

The electronic device implements a display function by using the GPU, the display screen 494, the application processor, and the like. The GPU is a microprocessor for image processing, and is connected to the display screen 494 and the application processor. The GPU is configured to perform mathematical and geometric computing for graphics rendering. The processor 410 may include one or more GPUs. The one or more GPUs execute program instructions to generate or change displayed information.

The display screen 494 is configured to display an image, a video, and the like. The display screen 494 includes a display panel. The display panel may be a liquid crystal display (liquid crystal display, LCD), an organic light-emitting diode (organic light-emitting diode, OLED), an active-matrix organic light emitting diode or an active-matrix organic light emitting diode (active-matrix organic light emitting diode, AMOLED), a flexible light-emitting diode (flex light-emitting diode, FLED), a Miniled, a MicroLed, a Micro-oLed, a quantum dot light emitting diode (quantum dot light emitting diodes, QLED), or the like. In some embodiments, the electronic device may include 1 or N display screens 494, where N is a positive integer greater than 1.

The electronic device may implement a shooting function by using the ISP, the camera 493, the video codec, the GPU, the display screen 494, the application processor, and the like. In some embodiments, the electronic device may include 1 or N cameras 493, where N is a positive integer greater than 1.

The internal memory 421 may be configured to store computer-executable program code, and the executable program code includes instructions. The processor 410 performs various function applications and data processing of the electronic device by running the instructions stored in the internal memory 421. The internal memory 421 may include a program storage area and a data storage area. The program storage area may store an operating system, an application required by at least one function (for example, a sound playing function or an image playing function), and the like. The data storage area may store data (for example, audio data and a phone book) and the like created during use of the electronic device. In addition, the internal memory 421 may include a high-speed random access memory, and may further include a non-volatile memory, for example, at least one magnetic disk storage device, a flash memory device, or a universal flash storage (universal flash storage, UFS).

The acceleration sensor 480E may periodically collect acceleration data of the electronic device at a specific frequency. For example, magnitudes of acceleration of the electronic device in various directions (which are usually an X-axis direction, a Y-axis direction, and a Z-axis direction) may be collected.

Certainly, it may be understood that FIG. 4 shows merely an example description when a form of the electronic device is a mobile phone. If the electronic device is in another device form such as a tablet computer, a handheld computer, a PC, a PDA, or a wearable device (for example, a smartwatch or a smart band), the structure of the electronic device may include fewer structures than those shown in FIG. 4 or may include more structures than those shown in FIG. 4. This is not limited herein.

Methods in the following embodiments may be implemented in an electronic device having the foregoing hardware structure.

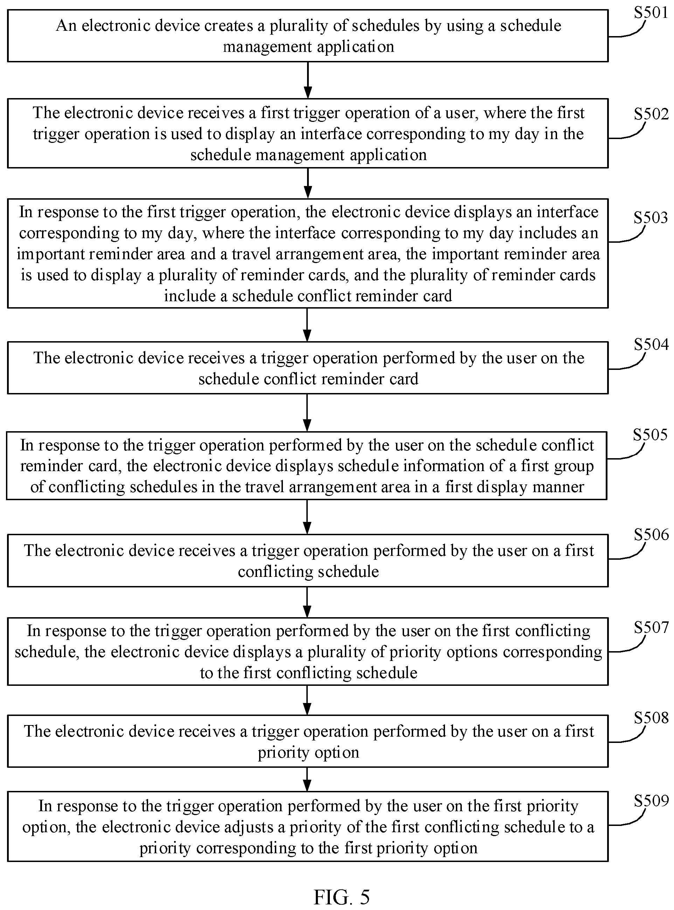

The schedule display method provided in the embodiments of this application is described in detail below with reference to FIG. 5. As shown in FIG. 5, the schedule display method may include S501-S509.

S501: An electronic device creates a plurality of schedules by using a schedule management application.

The schedule management application is a schedule management application that is available for a user to create and manage a to-do or schedule. A specific type of the schedule management application is not limited in this embodiment of this application. For example, the schedule management application may be a system calendar, or may be an email application, a mobile office application, or the like. In this embodiment of this application, an example in which the schedule management application is a system calendar application of the electronic device is used for description.

The user may create one or more schedules by using the schedule management application in the electronic device. A specific type of a schedule created by the user is not limited in this embodiment of this application. For example, the type of the schedule created by the user by using the schedule management application may be a type such as a schedule type, an alarm clock type, or a to-do type. In this embodiment of this application, an example in which the type of the schedule created by the user is the schedule type is used for description.

To be specific, after determining schedule information of a specific schedule, the user may open the schedule management application of the electronic device, and create a corresponding schedule or to-do in the schedule management application, so that the electronic device can remind the user at a specified time point based on schedule information of the schedule or to-do.

The schedule information of the schedule may include information such as a name of the schedule, a time of the schedule (namely, a start time and an end time of the schedule), a place of the schedule (for example, a meeting room corresponding to a meeting schedule, and a destination corresponding to a travel schedule), and a person of the schedule. A specific type of the schedule information of the schedule is not limited in this embodiment of this application.

S502: The electronic device receives a first trigger operation of the user, where the first trigger operation is used to display an interface corresponding to my day in the schedule management application.

After the electronic device creates a plurality of schedules by using the schedule management application, the electronic device may receive the first trigger operation of the user. The first trigger operation may be used to display the interface corresponding to my day in the schedule management application (for example, a calendar application). In this embodiment of this application, the interface corresponding to my day may also be referred to as a first interface.

The interface corresponding to my day may include a schedule, a to-do, an alarm, or the like of the user on the current day.

In some examples, the first trigger operation may include a trigger operation performed by the user on the calendar application in the electronic device, and a trigger operation performed by the user on a my day control in the interface corresponding to the calendar application. In other words, after the electronic device receives the trigger operation performed by the user on the schedule management application (for example, the calendar application), the electronic device may display the interface corresponding to the schedule management application (for example, the calendar application). The interface corresponding to the schedule management application in this embodiment of this application may also be referred to as a second interface. The interface corresponding to the calendar application may include the my day control. In this embodiment of this application, the my day control may also be referred to as a first control. After the electronic device receives a trigger operation such as a tap operation performed by the user on the my day control, the electronic device may display an interface corresponding to my day. In this embodiment of this application, the trigger operation performed by the user on the my day control may also be referred to as a thirteenth operation.

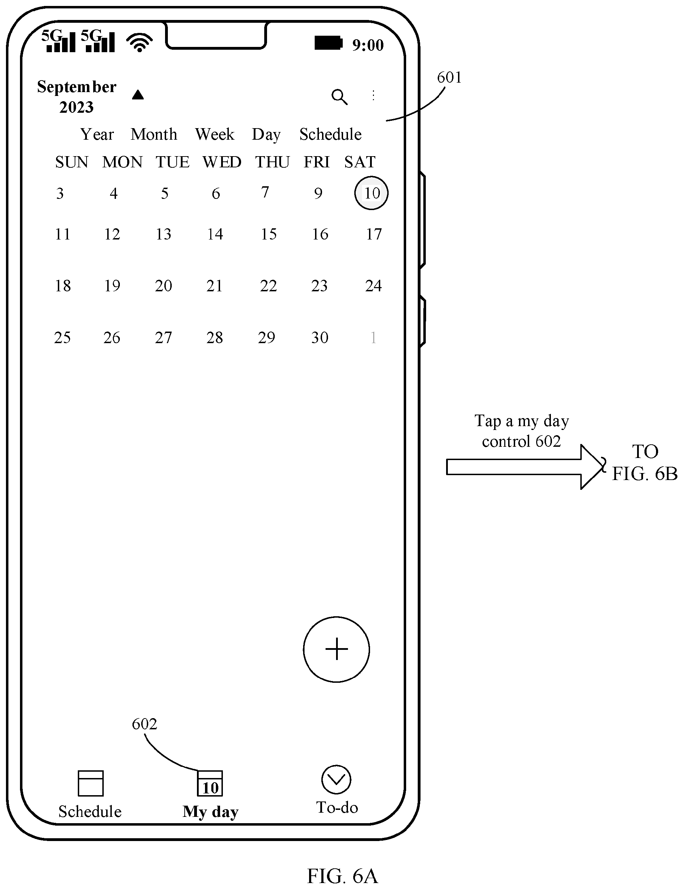

For example, the electronic device is a mobile phone, and the mobile phone may include a calendar application. When the mobile phone receives a trigger operation such as a tap operation performed by the user on the calendar application, as a response, as shown in FIG. 6A, the mobile phone may display an interface 601 corresponding to the calendar application. The interface 601 corresponding to the calendar application may include a my day control 602.

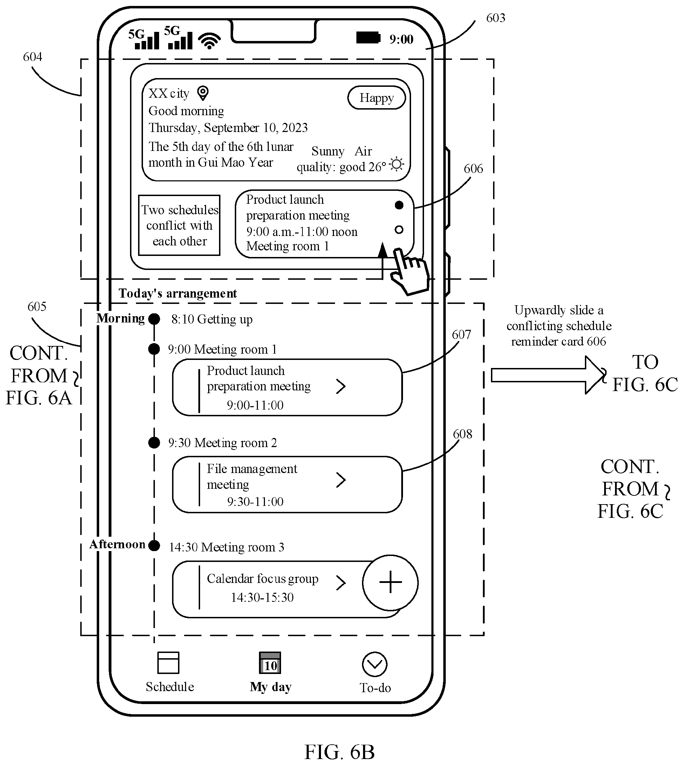

Then, when the mobile phone receives the trigger operation performed by the user on the my day control 602, as shown in FIG. 6B, as a response, the mobile phone may display an interface 603 corresponding to my day.

In some other examples, the first trigger operation may include a trigger operation performed by the user on the schedule reminder card on the home screen of the electronic device. In other words, when the electronic device receives the trigger operation such as a tap operation performed by the user on the schedule reminder card on the home screen of the electronic device (in this embodiment of this application, the home screen of the electronic device may also be referred to as a third interface), the electronic device may display the interface corresponding to my day. In this embodiment of this application, the trigger operation performed by the user on the schedule reminder card on the home screen (namely, the third interface) of the electronic device may also be referred to as a fourteenth operation.

The schedule reminder card may include schedule reminder information. The schedule reminder information may include a schedule corresponding to a specific date, a conflicting schedule in schedules corresponding to the date, date information corresponding to the date, and the like. It should be noted that the schedule reminder information may further include other reminder information, for example, information such as a quantity of schedules included in the date, and a schedule name and a time corresponding to a conflicting schedule. Specific content included in the schedule reminder information is not limited in this embodiment of this application.

It should be noted that the schedule reminder card may include a today's schedule reminder card and a tomorrow's schedule reminder card. The user may tap the today's schedule reminder card to trigger the electronic device to display schedule information corresponding to today (in this embodiment of this application, today may also be referred to as a first date). The user may tap the tomorrow's schedule reminder card to trigger the electronic device to display schedule information corresponding to tomorrow (in this embodiment of this application, tomorrow may also be referred to as a second date).

A today's schedule card is a schedule reminder card corresponding to the current date. A tomorrow's schedule card is a schedule reminder card corresponding to a next day following the current date. In other words, the first trigger operation may include a tap operation performed by the user on the today's schedule reminder card on the home screen of the electronic device, or a tap operation performed by the user on the tomorrow's schedule reminder card on the home screen of the electronic device.

In some examples, when the electronic device displays the schedule reminder card, the electronic device may first display the today's schedule reminder card. After expiration of first preset duration, the electronic device may display the tomorrow's schedule reminder card. After the electronic device displays the tomorrow's schedule reminder card for the first preset duration, the electronic device may further display the today's schedule reminder card again. To be specific, after the electronic device displays the today's schedule reminder card, if the electronic device does not receive, within the first preset duration, a trigger operation (for example, a tap operation) performed by the user on the today's schedule reminder card, the electronic device may display the tomorrow's schedule reminder card.

The electronic device may display the schedule reminder card on the home screen, so that the user can learn a conflicting schedule by using the schedule reminder card on the home screen, thereby improving user experience. In addition, when the electronic device displays the schedule reminder card on the home screen, a case that the user cannot see a prompt card corresponding to the schedule in a timely manner can be avoided, thereby further improving user experience.

In some other examples, when the electronic device displays the schedule reminder card, the electronic device may first display the today's schedule reminder card. When the electronic device receives a trigger operation such as a rightward sliding operation performed by the user on the today's schedule reminder card (in this embodiment of this application, the trigger operation performed by the user on the today's schedule reminder card may also be referred to as a fifteenth operation), the electronic device may display the tomorrow's schedule reminder card. When the electronic device displays the tomorrow's schedule reminder card, if the electronic device receives a trigger operation such as a leftward sliding operation performed by the user on the today's schedule reminder card (in this embodiment of this application, the trigger operation performed by the user on the today's schedule reminder card may also be referred to as a sixteenth operation), the electronic device may display the today's schedule reminder card. To be specific, after the electronic device displays the today's schedule reminder card, if the electronic device does not receive, within the first preset duration, a rightward sliding operation or a tap operation performed by the user on the today's schedule reminder card, the electronic device may display the tomorrow's schedule reminder card.

A specific manner in which the electronic device switches to display the today's schedule reminder card and the tomorrow's schedule reminder card is not limited in this embodiment of this application. In this embodiment of this application, description is provided by using an example in which after the electronic device displays the today's schedule reminder card for the first preset duration, the electronic device displays the tomorrow's schedule reminder card; and after the electronic device displays the tomorrow's schedule reminder card for the first preset duration, the electronic device displays the today's schedule reminder card.

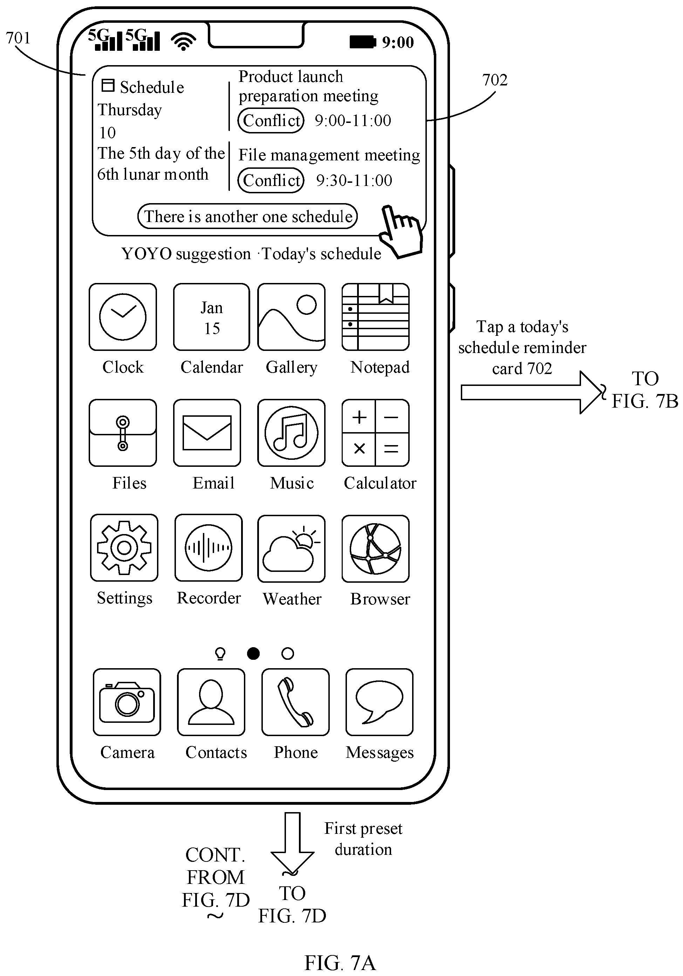

For example, again, the electronic device is a mobile phone, and the mobile phone may include a calendar application. After the user creates a plurality of schedules by using the calendar application on the mobile phone, as shown in FIG. 7A, the mobile phone may display a today's schedule reminder card 702 on a home screen 701.

As shown in FIG. 7A, the today's schedule reminder card 702 may include schedule reminder information corresponding to a today's schedule. The schedule reminder information corresponding to the today's schedule may include a schedule name (for example, a product launch preparation meeting and a file management meeting) of a conflicting schedule in schedules corresponding to today, and date information (for example, Thursday and the fifth day of the sixth lunar month) corresponding to today. The schedule corresponding to today further includes a quantity of schedules (for example, there is another one schedule). The schedule reminder information corresponding to the today's schedule further includes a time corresponding to the conflicting schedule (namely, a time of the product launch preparation meeting and a time of the file management meeting).

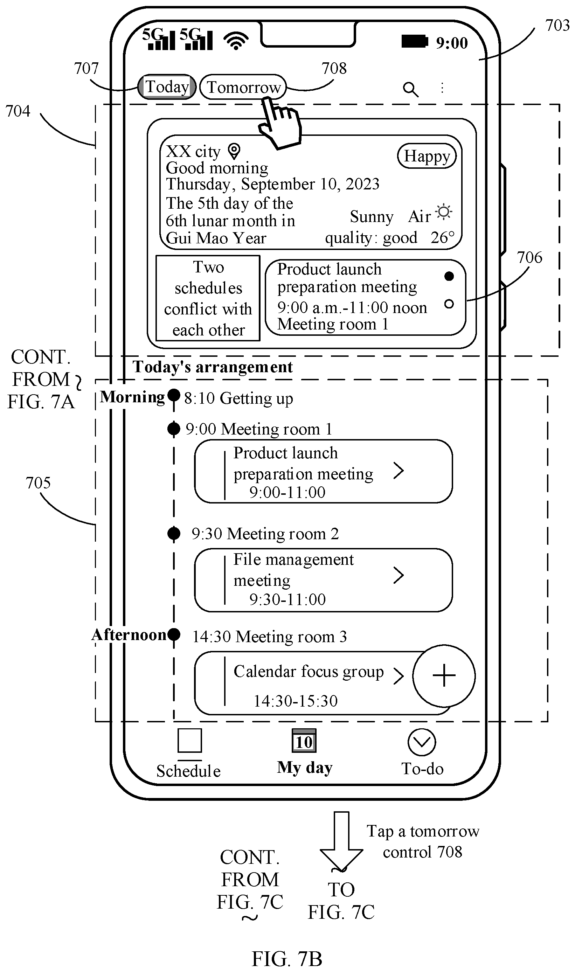

If the mobile phone receives a trigger operation such as a tap operation performed by the user on the today's schedule reminder card 702, as a response, as shown in FIG. 7B, the mobile phone may open the calendar application and display a my day interface 703 corresponding to today.

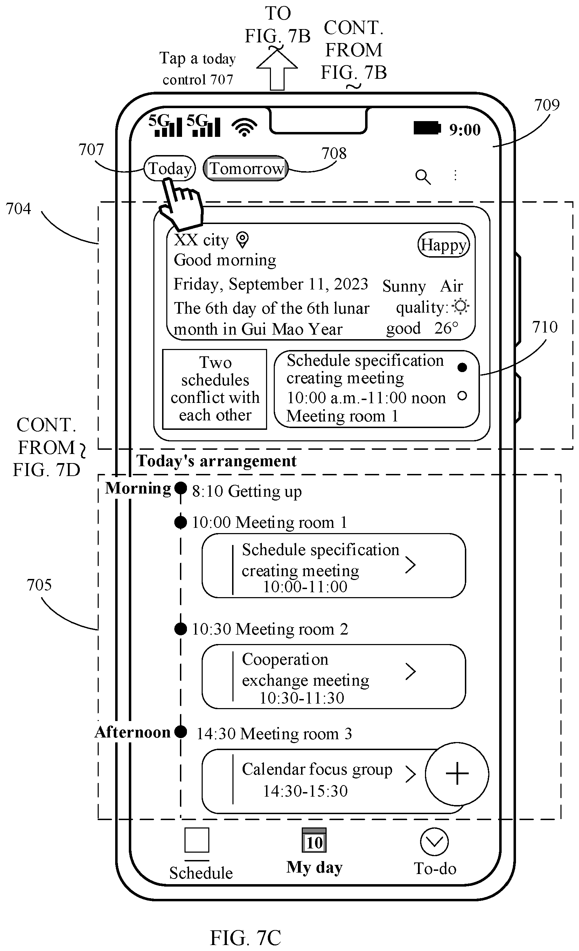

The my day interface 703 corresponding to today may include a today control 707 and a tomorrow control 708. When the mobile phone receives a trigger operation such as a tap operation performed by the user on the tomorrow control 708, as a response, as shown in FIG. 7C, the mobile phone may display a my day interface 709 corresponding to tomorrow.

It should be noted that the my day interface 709 corresponding to tomorrow may also include a today control 707 and a tomorrow control 708. When the mobile phone receives a trigger operation such as a tap operation performed by the user on the today control 707, as a response, as shown in FIG. 7B, the mobile phone may display the my day interface 703 corresponding to today.

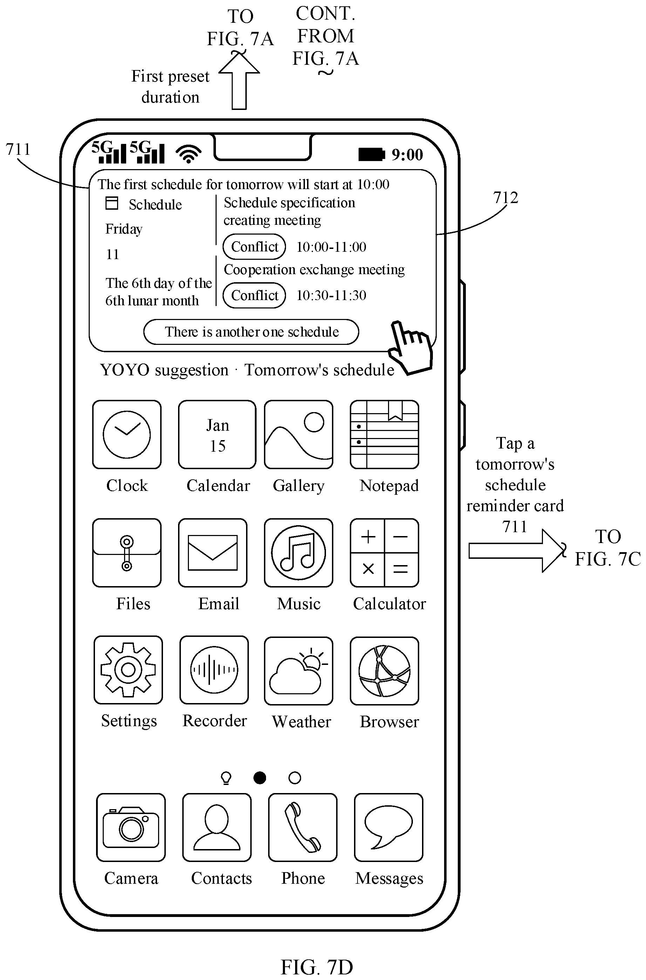

As shown in FIG. 7A, within the first preset duration during which the mobile phone displays the today's schedule reminder card 702, if the mobile phone does not receive a trigger operation (for example, a tap operation) performed by the user on the today's schedule reminder card 702, as a response, as shown in FIG. 7D, the mobile phone may display the tomorrow's schedule reminder card 712 on the home screen 711. Alternatively, the user may switch two cards through sliding.

As shown in FIG. 7D, within the first preset duration during which the mobile phone displays the tomorrow's schedule reminder card 712, if the mobile phone does not receive a trigger operation (for example, a tap operation) performed by the user on the tomorrow's schedule reminder card 712, as a response, as shown in FIG. 7A, the mobile phone may display the today's schedule reminder card 702 on the home screen 701.

As shown in FIG. 7D, after the mobile phone displays the tomorrow's schedule reminder card 712, if the mobile phone receives a trigger operation such as a tap operation performed by the user on the tomorrow's schedule reminder card 712, as a response, as shown in FIG. 7C, the mobile phone may display a my day interface 709 corresponding to tomorrow.

S503: In response to the first trigger operation, the electronic device displays an interface corresponding to my day, where the interface corresponding to my day includes an important reminder area and a travel arrangement area, the important reminder area is used to display a plurality of reminder cards, and the plurality of reminder cards include a schedule conflict reminder card.

When the electronic device receives the first trigger operation of the user, as a response, the electronic device may display the interface corresponding to my day. The interface corresponding to my day may include content such as a schedule, a to-do, or an alarm created for a date corresponding to my day.

The interface corresponding to my day may include an important reminder area and a travel arrangement area. The important reminder area may be located in an upper part of the interface corresponding to my day, and the travel arrangement area may be located in a lower part of the interface corresponding to my day, thereby helping the user view content in the important reminder area.

The important reminder area may be used to display a schedule conflict reminder card. The schedule conflict reminder card is used to remind the user that a conflicting schedule (namely, a conflicting schedule) exists in the schedules corresponding to the current date. The conflicting schedule may be a schedule with a time (for example, a start time or an end time) conflict, or the conflicting schedule may be a schedule with a place conflict. This is not limited in this embodiment of this application.

For example, after the electronic device creates the plurality of schedules by using the schedule management application, the electronic device may calculate times (start times and end times) corresponding to two schedules to determine whether the two schedules are conflicting schedules. When the start time or the end time of one schedule falls between the start time and the end time of the other schedule, the electronic device may determine that the two schedules are conflicting schedules, and are schedules with a time conflict. When neither the start time nor the end time of one schedule falls between the start time and the end time of the other schedule, the electronic device may determine that the two schedules are not conflicting schedules.

For another example, after the electronic device creates the plurality of schedules by using the schedule management application, the electronic device may calculate a travel time between places corresponding to the two schedules, and determine whether the two schedules are conflicting schedules. When the travel time between the places corresponding to the two schedules is less than a time interval between the two schedules (namely, a time interval between the end time of one schedule and the start time of the other schedule), the electronic device may determine that the two schedules are conflicting schedules, and are schedules with a place conflict. When the travel time between the places corresponding to the two schedules is greater than or equal to the time interval between the two schedules, the electronic device may determine that the two schedules are not conflicting schedules.

The schedule conflict reminder card may include information such as a quantity of conflicting schedules, a name corresponding to a conflicting schedule, a time (namely, a start time and an end time) corresponding to the conflicting schedule, and a place corresponding to the conflicting schedule. Specific content included in the schedule conflict reminder card is not limited in this embodiment of this application. For example, the schedule conflict reminder card may further include an immediate view control, and the immediate view control may be configured to trigger the electronic device to highlight a conflicting schedule in the travel arrangement area, so as to remind the user.

In some examples, the plurality of reminder cards may further include a weather reminder card. The weather reminder card may be used to prompt weather information of a current place or a destination. The current place is a location at which the electronic device is currently located. The destination is a destination corresponding to a travel schedule in schedules corresponding to a current date. The travel schedule is a schedule in which the user needs to move from a first location to a second location. The weather reminder card may further include daily care message reminder information. The daily care message reminder information may provide different reminders based on different weather information. For example, when the weather information is rain, the daily care message reminder information may include information such as reminding the user to take an umbrella.

The travel arrangement area may include schedule information and a time axis of a plurality of schedules corresponding to the current date. The electronic device may display schedule information of each schedule at a corresponding location of the time axis based on a start time corresponding to the schedule, so that the user can learn the start time of the schedule.

The schedule information may include information such as a start time corresponding to the schedule, an end time corresponding to the schedule, a name of the schedule, and a place of the schedule. It should be noted that the travel arrangement area may further include to-do information (for example, a name, a place, and a time of a to-do) that is of the to-do corresponding to the current date and that is created by the user, alarm clock information (for example, a time and a name of an alarm clock) that corresponds to the alarm clock corresponding to the current date and that is created by the user, and a motion record that corresponds to the current date and that is created by the user. A type of specific content included in the travel arrangement area is not limited in this embodiment of this application.

For example, again, the electronic device is a mobile phone and the mobile phone includes a calendar application. Referring to FIG. 6A, the mobile phone may display an interface 601 corresponding to the calendar application, and the interface 601 corresponding to the calendar application may include a my day control 602.

When the mobile phone receives a trigger operation such as a tap operation performed by the user on the my day control 602, as a response, as shown in FIG. 6B, the mobile phone may display an interface 603 corresponding to my day. The interface 603 corresponding to my day may include an important reminder area 604 and a travel arrangement area 605. The important reminder area 603 may be located in an upper part of the interface 603 corresponding to my day, and the travel arrangement area 605 may be located in a lower part of the interface 603 corresponding to my day.

The important reminder area 604 may include a schedule conflict reminder card 606. The schedule conflict reminder card 606 is used to remind the user that a conflicting schedule (namely, a conflicting schedule) exists in the schedules corresponding to the current date. The schedule conflict reminder card 606 may include schedule information of the conflicting schedule, that is, information such as a quantity of conflicting schedules, a name corresponding to a conflicting schedule, a time corresponding to the conflicting schedule, and a place corresponding to the conflicting schedule. The important reminder area 604 may further include a weather card, and the weather card is used to prompt information such as weather of a current place or a destination.

When there are a plurality of conflicting schedules, the schedule conflict reminder card 606 may display a first conflicting schedule (for example, a conflicting schedule with an earliest start time) in the plurality of conflicting schedules. As shown in FIG. 6B, the first conflicting schedule may be a product launch preparation meeting schedule. The mobile phone may display schedule information corresponding to the first conflicting schedule in the schedule conflict reminder card 606, that is, a name (namely, a product launch preparation meeting) of the conflicting schedule, a time (namely, 9:00 a.m.-11:00 noon) corresponding to the first conflicting schedule, and a place (namely, a meeting room 1) corresponding to the first conflicting schedule.

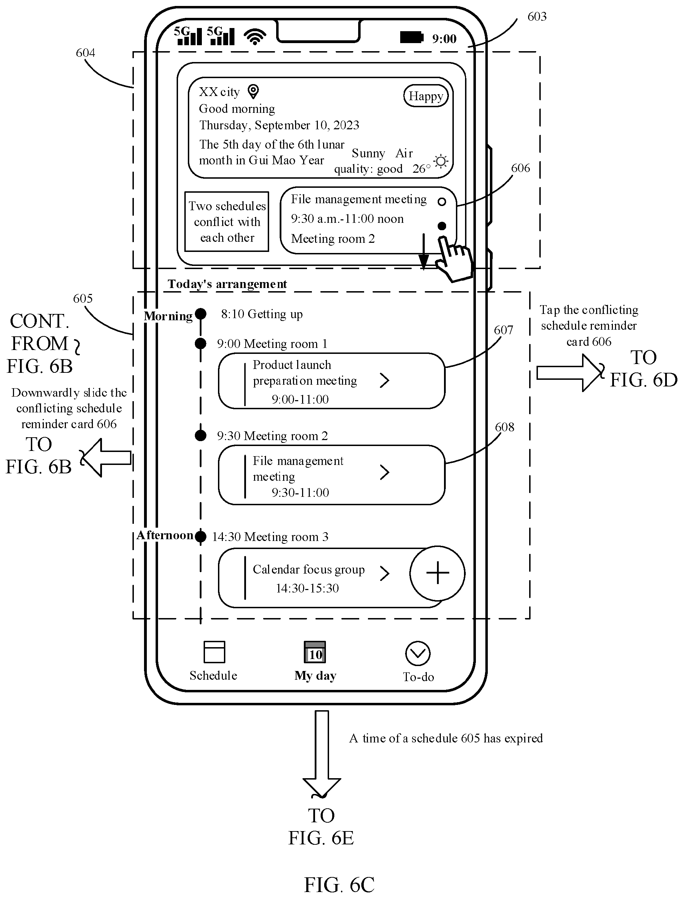

As shown in FIG. 6B, when the conflicting schedule is a group of conflicting schedules, and the mobile phone displays the first conflicting schedule (namely, a first schedule in the group of conflicting schedules) in the schedule conflict reminder card 606, if the mobile phone receives an upward sliding operation performed by the user on the schedule conflict reminder card 606, as a response, as shown in FIG. 6C, the mobile phone may display schedule information corresponding to a second conflicting schedule in the schedule conflict reminder card 606. The second conflicting schedule is a schedule that conflicts (a time conflict or a place conflict) with the first conflicting schedule. The schedule information corresponding to the second conflicting schedule may include a name (namely, a file management meeting) of the conflicting schedule, a time (namely, 9:30 a.m.-11:00 noon) corresponding to the second conflicting schedule, and a place (namely, a meeting room 2) corresponding to the second conflicting schedule.

It should be noted that, as shown in FIG. 6C, when the mobile phone displays the second conflicting schedule in the schedule conflict reminder card 606, if the mobile phone receives a downward sliding operation performed by the user on the schedule conflict reminder card 606, as a response, as shown in FIG. 6B, the mobile phone may display schedule information corresponding to the first conflicting schedule in the schedule conflict reminder card 606.

As shown in FIG. 6B or FIG. 6C, the travel arrangement area 605 may include schedule information and a time axis of a plurality of schedules corresponding to the current date. The mobile phone may display schedule information of each schedule at a corresponding location of the time axis based on a start time corresponding to the schedule. For example, a start time of the product launch preparation meeting schedule 607 is 9:00 a.m., and the mobile phone may display the product launch preparation meeting schedule 607 at a location of 9:00 a.m. on the time axis. A start time of the file management meeting schedule 608 is 9:30 a.m., and the mobile phone may display the file management meeting schedule 608 at a location of 9:30 a.m. on the time axis.

The travel arrangement area 605 may include schedule information and a time axis of a plurality of schedules corresponding to the current date. The mobile phone may display schedule information of each schedule at a corresponding location of the time axis based on a start time corresponding to the schedule. For example, a start time of the product launch preparation meeting schedule 607 is 9:00 a.m., and the mobile phone may display the product launch preparation meeting schedule 607 at a location of 9:00 a.m. on the time axis. A start time of the file management meeting schedule 608 is 9:30 a.m., and the mobile phone may display the file management meeting schedule 608 at a location of 9:30 a.m. on the time axis.

It should be noted that, after the mobile phone displays the interface 603 corresponding to my day shown in FIG. 6B or FIG. 6C, if a schedule whose time has expired exists in the plurality of schedules corresponding to the current date included in the travel arrangement area 605, the mobile phone may display the schedule in gray and display the schedule in a folding manner, so as to prompt the user that the time of the schedule has expired.

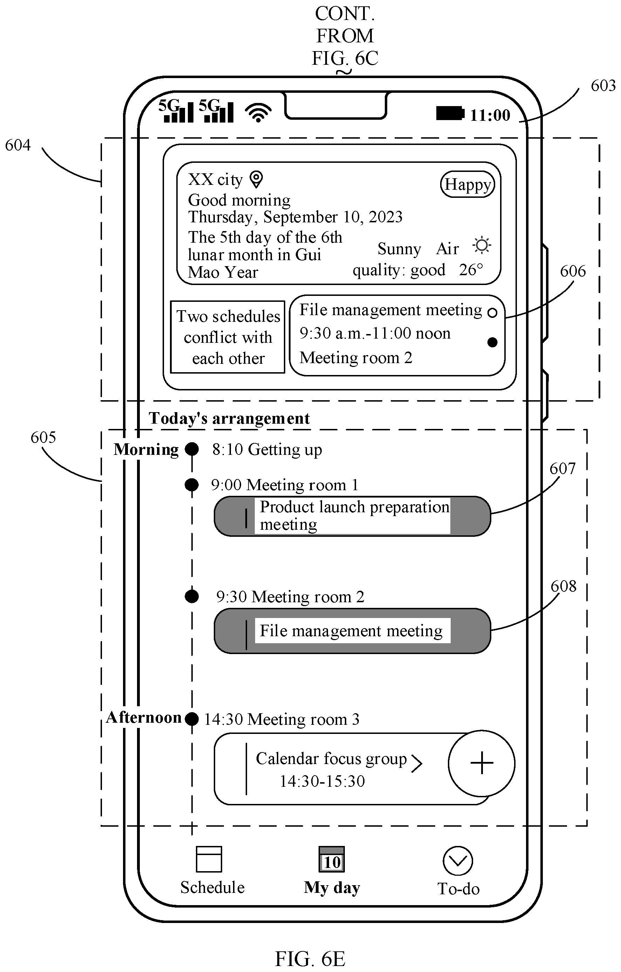

For example, after the mobile phone displays the interface 603 corresponding to my day shown in FIG. 6C, if the time of the product launch preparation meeting schedule 607 included in the travel arrangement area 605 has expired (that is, the current time has exceeded the end time of the product launch preparation meeting schedule 607), as shown in FIG. 6E, the mobile phone may display the product launch preparation meeting schedule 607 in the travel arrangement area 605 in gray, and the mobile phone may display the product launch preparation meeting schedule 607 in a folding manner. To be specific, the mobile phone may hide partial schedule information (for example, a meeting time) of the product launch preparation meeting schedule 607, and the mobile phone may display only partial schedule information (for example, a meeting name) of the product launch preparation meeting schedule 607.

For another example, with reference to FIG. 7A, the mobile phone may display a today's schedule reminder card 702 on a home screen 701. When the mobile phone receives a trigger operation such as a tap operation performed by the user on the today's schedule reminder card 702, as a response, as shown in FIG. 7B, the mobile phone may display the my day interface 703 corresponding to today.

The my day interface 703 corresponding to today may include an important reminder area 704 and a travel arrangement area 705. The important reminder area 704 may be located in an upper part of the my day interface 703 corresponding to today, and the travel arrangement area 705 may be located in a lower part of the my day interface 703 corresponding to today.

The important reminder area 704 may include a schedule conflict reminder card 706. When there are a plurality of conflicting schedules, the schedule conflict reminder card 706 may display a first conflicting schedule (for example, a conflicting schedule with an earliest start time) in the plurality of conflicting schedules. As shown in FIG. 7B, the first conflicting schedule may be a product launch preparation meeting schedule. The mobile phone may display schedule information corresponding to the first conflicting schedule in the schedule conflict reminder card 706, that is, a name (namely, a product launch preparation meeting) of the conflicting schedule, a time (namely, 9:00 a.m.-11:00 noon) corresponding to the first conflicting schedule, and a place (namely, a meeting room 1) corresponding to the first conflicting schedule. The important reminder area 704 may further include a weather card, and the weather card is used to prompt information such as weather of a current place or a destination.

As shown in FIG. 7B, the travel arrangement area 705 may include schedule information and a time axis of a plurality of schedules corresponding to the current date. The mobile phone may display schedule information of each schedule at a corresponding location of the time axis based on a start time corresponding to the schedule. For example, a start time of the product launch preparation meeting schedule is 9:00 a.m., and the mobile phone may display the product launch preparation meeting schedule at a location of 9:00 a.m. on the time axis. A start time of the file management meeting schedule is 9:30 a.m., and the mobile phone may display the file management meeting schedule at a location of 9:30 a.m. on the time axis. A start time of a calendar focus group schedule is 14:30 p.m., and the mobile phone may display the calendar focus group schedule at a location of 14:30 a.m. on the time axis.

For another example, with reference to FIG. 7D, the mobile phone may display a tomorrow's schedule reminder card 712 on a home screen 711. When the mobile phone receives a trigger operation such as a tap operation performed by the user on the tomorrow's schedule reminder card 712, as a response, as shown in FIG. 7C, the mobile phone may display the my day interface 709 corresponding to tomorrow.

The my day interface 709 corresponding to tomorrow may include an important reminder area 704 and a travel arrangement area 705. The important reminder area 704 may be located in an upper part of the my day interface 709 corresponding to tomorrow, and the travel arrangement area 705 may be located in a lower part of the my day interface 709 corresponding to tomorrow.

The important reminder area 704 may include a schedule conflict reminder card 710. When there are a plurality of conflicting schedules, the schedule conflict reminder card 710 may display a first conflicting schedule (for example, a conflicting schedule with an earliest start time) in the plurality of conflicting schedules. As shown in FIG. 7B, the first conflicting schedule may be a schedule specification creating meeting schedule. The mobile phone may display schedule information corresponding to the first conflicting schedule in the schedule conflict reminder card 710, that is, a name (namely, a schedule specification creating meeting) of the conflicting schedule, a time (namely, 10:00 a.m.-11:00 noon) corresponding to the first conflicting schedule, and a place (namely, a meeting room 1) corresponding to the first conflicting schedule. The important reminder area 704 may further include a weather card, and the weather card is used to prompt information such as weather of a current place or a destination.

As shown in FIG. 7C, the travel arrangement area 705 may include schedule information and a time axis of a plurality of schedules corresponding to the current date. The mobile phone may display schedule information of each schedule at a corresponding location of the time axis based on a start time corresponding to the schedule. For example, a start time of the schedule specification creating meeting schedule is 10:00 a.m., and the mobile phone may display the schedule specification creating meeting schedule at a location of 10:00 a.m. on the time axis. A start time of a cooperation exchange meeting schedule is 10:30 a.m., and the mobile phone may display the cooperation exchange meeting schedule at a location of 10:30 a.m. on the time axis. The important reminder area 704 may further include a weather card, and the weather card is used to prompt information such as weather of a current place or a destination.

In some examples, the schedule conflict reminder card may alternatively be a plurality of schedule conflict reminder cards. Each schedule conflict reminder card may display schedule information of one conflicting schedule, that is, information such as a name corresponding to the conflicting schedule, a time corresponding to the conflicting schedule, and a place corresponding to the conflicting schedule.

It should be noted that, when the electronic device displays the plurality of schedule conflict reminder cards in the important reminder area, each schedule conflict reminder card may further include a priority marking control (in this embodiment of this application, the priority marking control may also be referred to as a schedule priority adjustment control). The priority marking control may be configured to trigger the electronic device to display a plurality of priority options of a conflicting schedule corresponding to the conflicting schedule reminder card, so that the user can select and adjust a priority of the conflicting schedule corresponding to the conflicting schedule reminder card (in this embodiment of this application, a priority of a schedule may also be referred to as a schedule priority).

When the electronic device displays the plurality of schedule conflict reminder cards in the important reminder area, the electronic device may first display the first schedule conflict reminder card in the important reminder area (in this embodiment of this application, the first schedule conflict reminder card may also be referred to as the first schedule conflict reminder card). The schedule information in the first schedule conflict reminder card may be schedule information of the first conflicting schedule (in this embodiment of this application, the first conflicting schedule may also be referred to as the first conflicting schedule). The first conflicting schedule is a schedule with an earliest start time in the conflicting schedules. In other words, the first schedule conflict reminder card may be used for schedule information of the first conflicting schedule in the first group of conflicting schedules.

Then, if the electronic device receives a leftward sliding operation performed by the user on the important reminder area (in this embodiment of this application, the leftward sliding operation performed by the user on the important reminder area may also be referred to as an eighth operation), the electronic device may display a second schedule conflict reminder card in the first group of conflicting schedules in the important reminder area (in this embodiment of this application, the second schedule conflict reminder card may also be referred to as the second schedule conflict reminder card). The schedule information in the second schedule conflict reminder card may be schedule information of the second conflicting schedule (in this embodiment of this application, the second conflicting schedule may also be referred to as the second conflicting schedule). The second conflicting schedule is a schedule whose start time is later than the start time of the first conflicting schedule in the conflicting schedules.

After the electronic device displays the second schedule conflict reminder card in the important reminder area, if the electronic device receives a rightward sliding operation performed by the user on the important reminder area, the electronic device may display the first schedule conflict reminder card in the important reminder area.

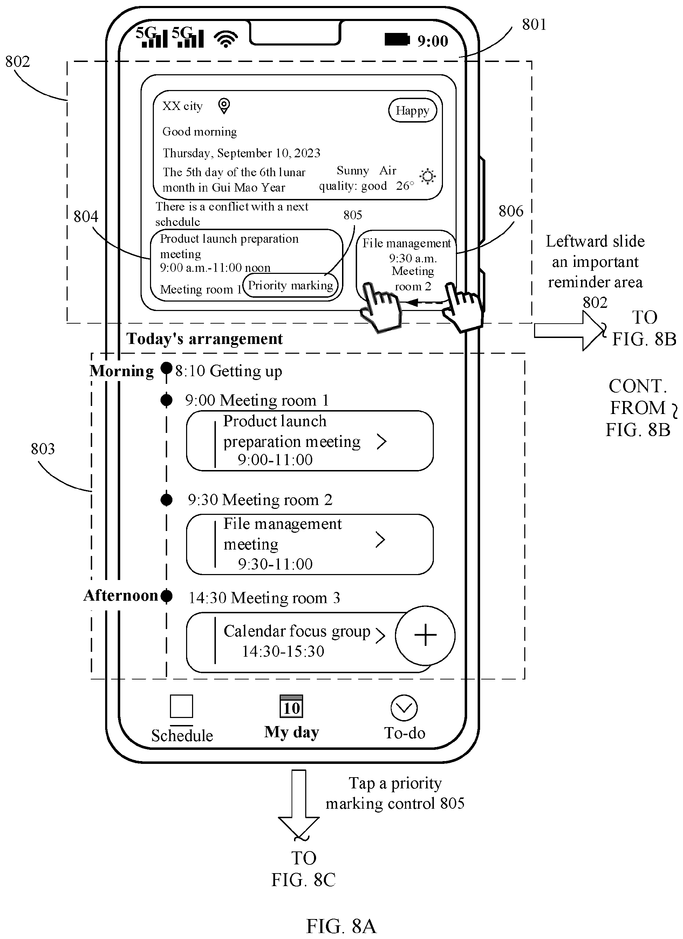

For example, again, the electronic device is a mobile phone. With reference to FIG. 8A, the mobile phone may display a my day interface 801.

The my day interface 801 may include an important reminder area 802 and a travel arrangement area 803. The important reminder area 802 may be located in an upper part of the my day interface 801, and the travel arrangement area 803 may be located in a lower part of the my day interface 801.

The important reminder area 802 may include a first schedule conflict reminder card 804. The first conflicting schedule reminder card 804 may be a schedule conflict reminder card corresponding to a product launch preparation meeting schedule (namely, the first conflicting schedule). The first schedule conflict reminder card 804 may include a priority marking control 805, and the priority marking control 805 may be configured to trigger the mobile phone to display a plurality of priority options corresponding to the product launch preparation meeting schedule.

When the mobile phone displays the first schedule conflict reminder card 804 in the important reminder area 802, as shown in FIG. 8A, the mobile phone may display all content of the first schedule conflict reminder card 804 in the important reminder area 802, or the mobile phone may display some content of a second schedule conflict reminder card 806 in the important reminder area 802, so as to prompt the user that all content of the second schedule conflict reminder card 806 may be displayed through leftward sliding.

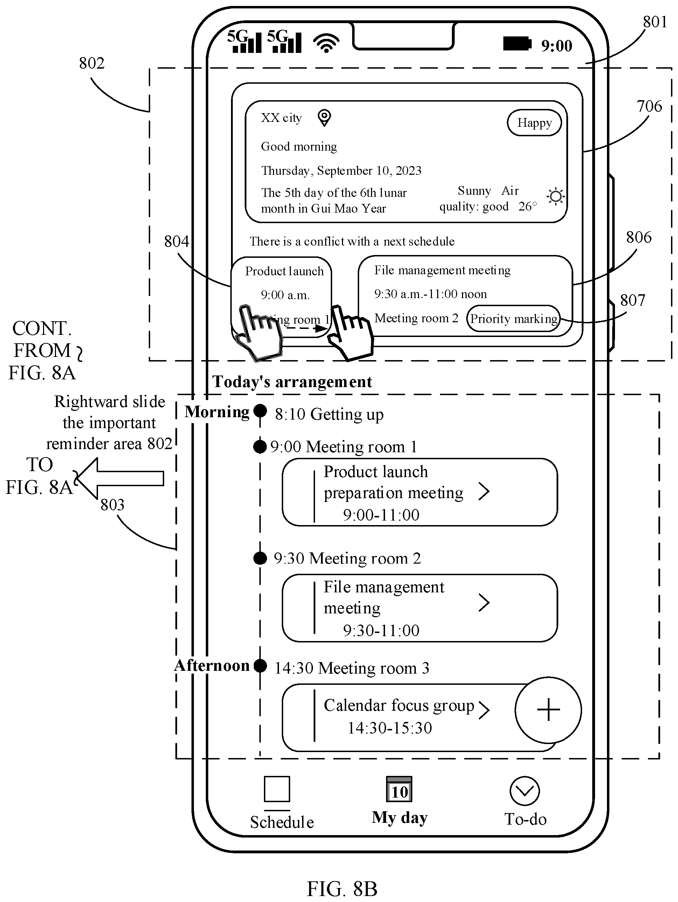

When the mobile phone receives a leftward sliding operation performed by the user on the important reminder area 802, as a response, as shown in FIG. 8B, the mobile phone may display all content of the second schedule conflict reminder card 806 in the important reminder area 902. The second conflicting schedule reminder card 806 may be a schedule conflict reminder card corresponding to a file management meeting schedule (namely, the second conflicting schedule). The priority marking control 807 may be configured to trigger the mobile phone to display a plurality of priority options corresponding to the file management meeting schedule (namely, the second conflicting schedule).

It should be noted that the important reminder area may further include other prompt information, and specific content that may be further included in the important reminder area is not limited in this embodiment of this application. In other words, the important reminder area may include not only a conflict reminder card and a weather reminder card, but also other prompt information.

For example, the important reminder area may further include information such as abnormal to-do reminder information, premature schedule reminder information, important schedule reminder information, care reminder information, and agenda reminder information.

In some examples, the abnormal to-do reminder information may include timeout to-do reminder information, timeout without arrangement reminder information, and premature schedule reminder information.

The timeout to-do reminder information is used to prompt the user that the created to-do has exceeded third preset duration (for example, 7 days), so that the user can be reminded to process the timeout to-do. In other words, the electronic device may determine whether the to-do created by the user exceeds a third preset time (for example, 7 days). When the to-do created by the user exceeds the third preset duration, the electronic device may display the timeout to-do reminder information in the important reminder area.

The timeout to-do reminder information may include information such as a name and a time of the to-do that has exceeded the third preset duration. The timeout to-do reminder information may further include a completion control and a time modification control. The completion control is configured to trigger the electronic device to determine that the user has processed the to-do that has exceeded the third preset duration, or the completion control is configured to trigger the electronic device to determine that the to-do that has exceeded the third preset duration is completed. The time modification control is configured to trigger the electronic device to modify a time (for example, a start time or a reminder time) corresponding to the to-do that has exceeded the third preset duration.

For example, the important reminder area may further include abnormal to-do reminder information. The abnormal to-do reminder information may include timeout to-do reminder information and timeout without arrangement reminder information.

The timeout to-do reminder information may be used to prompt the user that the created to-do has exceeded third preset duration (for example, 7 days), so that the user can be reminded to process the timeout to-do. In other words, the electronic device may determine whether the to-do created by the user exceeds a third preset time (for example, 7 days). When the to-do created by the user exceeds the third preset duration, the electronic device may display the timeout to-do reminder information in the important reminder area.

The timeout to-do reminder information may include information such as a name and a time of the to-do that has exceeded the third preset duration. The timeout to-do reminder information may further include a completion control and a time modification control. The completion control is configured to trigger the electronic device to determine that the user has processed the to-do that has exceeded the third preset duration, or the completion control is configured to trigger the electronic device to determine that the to-do that has exceeded the third preset duration is completed. The time modification control is configured to trigger the electronic device to modify a time (for example, a start time or a reminder time) corresponding to the to-do that has exceeded the third preset duration.

When there are a plurality of to-dos that have exceeded the third preset duration in the electronic device, the electronic device may randomly recommend a preset quantity (for example, 3) of to-dos that have exceeded the third preset duration for reminding.

The premature schedule reminder information may be used to prompt the user of a departure time for today or tomorrow, or may be used to prompt the user of a start time of a first schedule in schedules corresponding to today or tomorrow, so that the user can make a reasonable time arrangement.

For example, among the schedules corresponding to tomorrow, if a start time of an earliest started schedule is earlier than a departure time of the user, the electronic device may display premature schedule reminder information (the premature reminder information may include the start time of the earliest started schedule in the schedules corresponding to tomorrow) in the important reminder area one night in advance, so that the user can set a corresponding alarm clock by using the electronic device. For another example, if a travel schedule exists in the schedules corresponding to today or tomorrow, the electronic device may calculate a corresponding travel time between a current place and a destination in the travel schedule, so as to determine a trigger time of the user based on the travel time and the start time of the travel schedule. Then, the electronic device may display premature schedule reminder information (the premature reminder information may include a departure time corresponding to today or tomorrow) in the important reminder area.

For another example, if no travel schedule exists in the schedules corresponding to today or tomorrow, the electronic device determines the start time of the earliest started schedule for today or tomorrow. Then, the electronic device may display premature schedule reminder information (the premature reminder information may include the start time of the earliest started schedule for today or tomorrow) in the important reminder area.

In some examples, the important schedule reminder information may include holiday countdown reminder information, important day or birthday countdown reminder information, and compensatory leave reminder information.

The holiday countdown reminder information may be used to remind the user of the remaining duration of the holiday subscribed by the user. When the electronic device displays the holiday countdown reminder information in the important reminder area, the electronic device may display the holiday countdown reminder information (the holiday countdown reminder information may include a name and the like of the holiday) in the important reminder area when the remaining time between the current date and the holiday subscribed by the user is fourth preset duration (for example, 7 days, 3 days, 2 days, 1 day, or 0 days).

The important day or birthday countdown reminder information may be used to remind the user of the remaining duration of the important day or birthday. The birthday that is set by the user may be a birthday added by the user or a birthday of a contact person among contact persons of the user. The important day that is set by the user may be an important day added by the user, or may be an important day of the user identified by the electronic device, for example, the electronic device may identify an important day of the user by using a schedule or to-do created by the user, or a picture in a gallery. For example, when the electronic device may identify, by using the schedule or to-do created by the user, or the picture in the gallery, that the schedule or to-do created by the user, or the picture in the gallery includes words such as an anniversary (for example, marriage, falling in love, certificate receipt, marriage proposal, or graduation) or important words (for example, admission notice, enrollment, interview, examination, and contest), the electronic device may determine that a date corresponding to the schedule or to-do created by the user, or the picture in the gallery is an important day.

When the electronic device displays the important day or birthday countdown reminder information in the important reminder area, the electronic device may display the important day or birthday countdown reminder information (the important day or birthday countdown reminder information may include a name corresponding to the important day or a name of the user corresponding to the birthday) in the important reminder area when the countdown reminder information between the current date and the important day or birthday of the user is fourth preset duration (for example, 7 days, 3 days, 2 days, 1 day, or 0 days).

In some examples, the compensatory leave reminder information may be used to prompt the user of an abnormal workday or a compensatory leave day that the user can take a compensatory leave. Usual workdays may include weekday workdays, such as Saturday or weekend on duty in alternate weeks of five workdays and six workdays, or Saturday on duty in the last week of each month.

When the electronic device displays the compensatory leave reminder information in the important reminder area, the electronic device may display the compensatory leave reminder information (the compensatory leave reminder information may include that going to work is required on an abnormal workday, and so on) in the important reminder area one day before the abnormal workday or the compensatory leave day.

In some examples, the care reminder information may be used to provide a care reminder for the life of the user. For example, if among the schedules created by the user, there is still a schedule of a meeting type in a lunch time period, the electronic device may display the care reminder information (the care reminder information may include please making a food ordering in advance, and so on) in the important reminder area. For another example, if among the schedules created by the user, there is still a schedule of a meeting type during off-duty time of the user, the electronic device may display the care reminder information (the care reminder information may include having a good rest, and so on) in the important reminder area. The off-duty time of the user may be obtained by the electronic device by learning the off-duty time or the on-duty time of the user.

In some examples, the agenda reminder information may include meeting topic reminder information, owner identification reminder information, and abnormal scenario reminder information.

The meeting topic reminder information may be used to prompt information such as a meeting schedule related to the user and a time of the meeting schedule related to the user. For example, when a meeting schedule exists in the schedules created by the user, the electronic device may convert a meeting topic into a table form when writing the topic, so as to perform formatted splitting and presentation. The electronic device may identify the meeting schedule related to the user and the time of the meeting schedule related to the user, and mark the meeting schedule related to the user. Therefore, the electronic device may display meeting topic reminder information (the meeting topic reminder information may include information such as the meeting schedule related to the user and the time of the meeting schedule related to the user) in the important reminder area.

The owner identification information may be used to prompt whether the meeting schedule related to the user is related to the user. For example, when a meeting schedule exists in the schedules created by the user, the electronic device may determine, based on information such as a meeting account included in the meeting schedule, whether the meeting account included in the meeting schedule is a meeting account of the user (namely, the owner). When the meeting account included in the meeting schedule is not the meeting account of the user (namely, the owner), the electronic device may display the owner identification information (the owner identification information may include information such as the meeting schedule related to the user and the time of the meeting schedule related to the user) in the important reminder area.

The abnormal scenario reminder information may be used to prompt the user that there are a plurality of owner accounts in the electronic device, so that the user selects an owner account corresponding to the user. For example, when there are a plurality of owner accounts in the electronic device, the electronic device may display abnormal scenario reminder information (the abnormal scenario reminder information may include the plurality of owner accounts in the electronic device) in the important reminder area, so that the user can select an owner account corresponding to the user by using the abnormal scenario reminder information.

When there are a plurality of owner accounts in the electronic device, the electronic device may display the abnormal scenario reminder information in the interface corresponding to the calendar application, so that the user can select an owner account corresponding to the user by using the abnormal scenario reminder information.

In some examples, the important reminder area may alternatively be used to display a plurality of reminder cards, for example, cards such as a departure reminder card, a schedule conflict reminder card, a tomorrow's schedule reminder card, a weather reminder card, an important day reminder card, and a birthday reminder card. Specific types of the plurality of reminder cards that may be displayed in the important reminder area are not limited in this embodiment of this application. In this embodiment of this application, description is provided by using an example in which the important reminder area includes the departure reminder card, the schedule conflict reminder card, the tomorrow's schedule reminder card, the weather reminder card, the important day reminder card, and the birthday reminder card.

It should be noted that when the important reminder area may be used to display a plurality of reminder cards, the important reminder area may display the plurality of reminder cards at the same time, and the important reminder area may alternatively display one reminder card. The user may perform a sliding operation (for example, leftward sliding or optimization) in the important reminder area, so that the important reminder area can switch to display different reminder cards.

The departure reminder card may be used to prompt the user of reminder information corresponding to a travel schedule in the created schedules. The reminder information corresponding to the travel schedule may include information such as a departure time, a destination, a travel time, a name of the travel schedule, and an expected arrival time that correspond to the travel schedule.

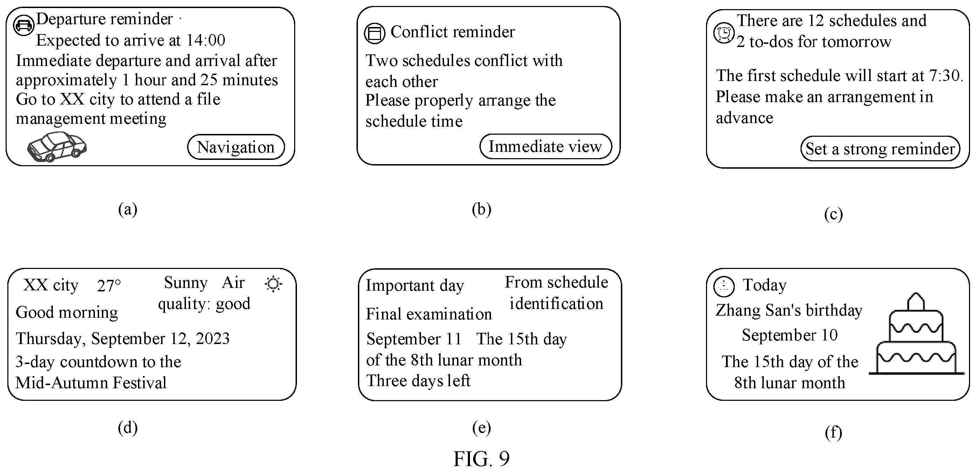

For example, when the schedules created by the user include the travel schedule (for example, going to xx city to attend a file management meeting), the mobile phone may display a departure reminder card in the important reminder area. As shown in (a) in FIG. 9, the departure reminder card may include departure information corresponding to the travel schedule. The departure information corresponding to the travel schedule may include a departure time (for example, an immediate departure), a destination (for example, XX city), a travel time (for example, arrival after approximately 1 hour and 25 minutes), a name of the travel schedule (for example, a file management meeting), and an expected arrival time (for example, expected to arrive at 14:00) that correspond to the travel schedule.

It should be noted that, as shown in (a) in FIG. 9, the departure reminder card may further include a navigation control. The navigation control is configured to trigger the mobile phone to display an interface of a navigation application, helping the user obtain a manner, a route, or the like for arriving at the destination corresponding to the travel schedule.

It should be noted that when the electronic device displays the departure reminder card in the important reminder area, the electronic device may calculate a departure time based on the time of the travel schedule and a start time of a first schedule following the travel schedule. Within a preset time before the departure time arrives or when the departure time arrives, the electronic device displays the departure reminder card in the important reminder area. When the start time of the first schedule following the travel schedule arrives, the electronic device may cancel the departure reminder card, that is, the electronic device may delete the departure reminder card.

The schedule conflict reminder card may be used to remind the user that a conflicting schedule (namely, a conflicting schedule) exists in the schedules corresponding to the current date. The schedule conflict reminder card may include information such as a quantity of conflicting schedules, a name corresponding to a conflicting schedule, a time (namely, a start time and an end time) corresponding to the conflicting schedule, and a place corresponding to the conflicting schedule.

The schedule conflict reminder card may further include an immediate view control, and the immediate view control may be configured to trigger the electronic device to highlight a conflicting schedule in the travel arrangement area, so as to prompt the user.

For example, when the schedules created by the user include a conflicting schedule (for example, there are two conflicting schedules), the mobile phone may display the schedule conflict reminder card in the important reminder area. As shown in (b) in FIG. 9, the schedule conflict reminder card may include information such as a quantity of conflicting schedules (for example, two schedules conflict with each other) and prompt information (for example, please properly arrange the schedule time).

As shown in (b) in FIG. 9, the schedule conflict reminder card may further include an immediate view control, and the immediate view control may be configured to trigger the mobile phone to highlight a conflicting schedule in the travel arrangement area, so as to prompt the user.

It should be noted that, when the electronic device displays the schedule conflict reminder card in the important reminder area, if the electronic device receives a trigger operation performed by the user on the immediate view control included in the schedule conflict reminder card, the electronic device may no longer display the schedule conflict reminder card when displaying the important reminder area in the interface corresponding to my day next time. To be specific, the electronic device may cancel the schedule conflict reminder card, that is, the electronic device may delete the schedule conflict reminder card.

In addition, when the electronic device displays the schedule conflict reminder card in the important reminder area, if a quantity of times the electronic device displays the schedule conflict reminder card is greater than a preset quantity of times (for example, twice), that is, a quantity of times the electronic device displays the interface corresponding to my day is greater than the preset quantity of times (for example, twice), and the electronic device does not receive, each time the electronic device displays the schedule conflict reminder card, a trigger operation performed by the user on the immediate view control, the electronic device may no longer display the schedule conflict reminder card when displaying the important reminder area in the interface corresponding to my day next time.

The tomorrow's schedule reminder card may be used to prompt the user of schedule information (namely, tomorrow's schedule information) of a next day following the created current date. The tomorrow's schedule information may include information such as a quantity of tomorrow's schedules, and a start time of a first schedule (namely, a start time of an earliest started schedule) in the tomorrow's schedules.

The tomorrow's schedule information may further include a strong reminder setting control, and the strong reminder setting control may be configured to trigger the electronic device to strongly remind the first schedule in the tomorrow's schedules. A strong reminder may include a plurality of times of a ringtone reminder, a vibration reminder, an interface reminder, and the like.

For example, when the schedules created by the user include the tomorrow's schedule (namely, a schedule of the next day of the current date), the mobile phone may display the tomorrow's schedule reminder card in the important reminder area. As shown in (c) in FIG. 9, the tomorrow's schedule reminder card may include information such as a quantity of tomorrow's schedules (for example, there are 12 schedules and 2 to-dos for tomorrow), a start time of a first schedule (for example, a start time of an earliest started schedule such as the first schedule) in the tomorrow's schedules, and prompt information (for example, please making an arrangement in advance). As shown in (c) in FIG. 9, the schedule conflict reminder card may further include a strong reminder setting control, and the strong reminder setting control may be used by the mobile phone to strongly remind the first schedule in the tomorrow's schedules.

The weather reminder card may be used to prompt weather information of a current place or a destination. The current place is a location at which the electronic device is currently located. The destination is a destination corresponding to a travel schedule in schedules corresponding to a current date. The travel schedule is a schedule in which the user needs to move from a first location to a second location. The weather reminder card may further include daily care message reminder information. The daily care message reminder information may provide different reminders based on different weather information. For example, when the weather information is rain, the daily care message reminder information may include information such as reminding the user to take an umbrella.

It should be noted that the weather reminder card may be a default card of the electronic device. To be specific, each time the electronic device displays the interface corresponding to my day, the electronic device may display the weather reminder card in the important reminder area.

For example, after the user creates a schedule, the mobile phone may display the weather reminder card in the important reminder area. As shown in (d) in FIG. 9, the weather reminder card may include weather information, temperature information, and daily care message reminder information (for example, good morning) of a current place or a destination. The weather reminder card may further include festival deadline countdown information (for example, three-day countdown to the Mid-Autumn Festival).

The important day reminder card may be used to prompt that the current date is a date corresponding to a schedule that is important to the user (namely, an important schedule). When the date corresponding to the schedule that is important to the user may be a schedule in which when the user creates a schedule, a priority of the created schedule is selected as important, or may be a schedule that includes a word of an important day in the schedules created by the user in the electronic device (for example, a schedule that includes words such as anniversary, birthday, marriage, falling in love, certificate receipt, marriage proposal, graduation, admission notice, enrollment, interview, examination, and contest).

The important day reminder card may include important day reminder information. The important day reminder information may include information such as current date information, a name of an important schedule, a time corresponding to the important schedule, and countdown to a date corresponding to an important day.

For example, after the user creates a schedule, the mobile phone may identify whether the schedule created by the user includes an important schedule. When the mobile phone identifies that the schedule created by the user includes an important schedule, the mobile phone may display an important day reminder card in the important reminder area. As shown in (e) in FIG. 9, the important day reminder card may include information such as a name of an important schedule (for example, a final examination), a time corresponding to the important schedule (for example, September 11, the 15th day of the 8th lunar month), and countdown (for example, three days left) to the date corresponding to an important day.

It should be noted that when the electronic device displays the important day reminder card in the important reminder area, the electronic device may display, when there are a preset quantity of days (for example, 7 days) left to an important day, the important day reminder card in the important reminder area every day within the preset quantity of subsequent days (for example, 7 days).

The birthday reminder card may be used to prompt that the current date is a birthday of the user or a birthday of another user set by the user. The birthday reminder card may include birthday reminder information. The birthday reminder information may include information such as current date information and a name of a user with a birthday.

For example, as shown in (d) in FIG. 9, the birthday reminder card may include information such as the current date information (for example, September 10 and the 15th day of the 8th lunar month) and the name of the user with the birthday.

It should be noted that when the electronic device displays the birthday reminder card in the important reminder area, the electronic device may display, when there are a preset quantity of days (for example, 7 days) left to a birthday, the birthday reminder card in the important reminder area every day within the preset quantity of subsequent days (for example, 7 days).

In some examples, when the electronic device displays a plurality of reminder cards in the important reminder area, for example, a departure reminder card, a schedule conflict reminder card, a tomorrow's schedule reminder card, a weather reminder card, an important day reminder card, and a birthday reminder card, the electronic device may display the reminder cards in the plurality of reminder cards in the important reminder area based on priorities of the plurality of reminder cards.

It should be noted that when the electronic device displays the plurality of reminder cards in the important reminder area, the electronic device may first determine whether there is a reminder card used for reminding. When the electronic device determines that there are a plurality of reminder cards used for reminding, the electronic device may display the reminder cards in the plurality of reminder cards in the important reminder area based on the priorities of the plurality of reminder cards (in this embodiment of this application, a priority of a reminder card may also be referred to as a card priority). In other words, when displaying the plurality of reminder cards in the important reminder area, the electronic device may sequentially display the plurality of reminder cards in an order of the card priorities of the plurality of reminder cards.

For example, the electronic device may first determine whether a travel schedule exists in the plurality of schedules created by the user. When the electronic device determines that the travel schedule exists in the plurality of schedules created by the user, the electronic device may display the departure reminder card in the important reminder area based on the priorities of the plurality of reminder cards. When the electronic device determines that no travel schedule exists in the plurality of schedules created by the user, the electronic device may display another reminder card in the important reminder area based on the priorities of the plurality of reminder cards.

The priorities of the plurality of reminder cards may be priorities that are set by the user, or may be priorities preset by the electronic device. This is not limited in this embodiment of this application. In this embodiment of this application, description is provided by using an example in which the priorities of the plurality of reminder cards are the priorities preset by the electronic device.

The priorities preset by the electronic device may include: A priority of the departure reminder card is higher than a priority of the schedule conflict reminder card; the priority of the schedule conflict reminder card is higher than a priority of the birthday reminder card; the priority of the birthday reminder card is higher than a priority of the important day reminder card; the priority of the important day reminder card is higher than a priority of the tomorrow's schedule reminder card; and the priority of the tomorrow's schedule reminder card is higher than a priority of the weather reminder card. In other words, initial card priorities of the plurality of reminder cards in descending order are sequentially as follows: the departure reminder card, the schedule conflict reminder card, the birthday reminder card, the important day reminder card, the tomorrow's schedule reminder card, and the weather reminder card.

In other words, when the electronic device displays the plurality of reminder cards in the important reminder area, the electronic device may first display a reminder card with a highest priority in the important reminder area (in this embodiment of this application, the reminder card with the highest priority may also be referred to as a first reminder card). When the electronic device receives a leftward sliding operation performed by the user on the important reminder area, the electronic device may display a reminder card with a second highest priority (namely, the schedule conflict reminder card). When the electronic device displays the reminder card with the second highest priority, if the electronic device receives the leftward sliding operation performed by the user on the important reminder area (in this embodiment of this application, the leftward sliding operation performed by the user on the important reminder area may also be referred to as a third operation), the electronic device may display a reminder card with a third highest priority. If the electronic device receives a rightward sliding operation performed by the user on the important reminder area, the electronic device may display the reminder card with the highest priority.

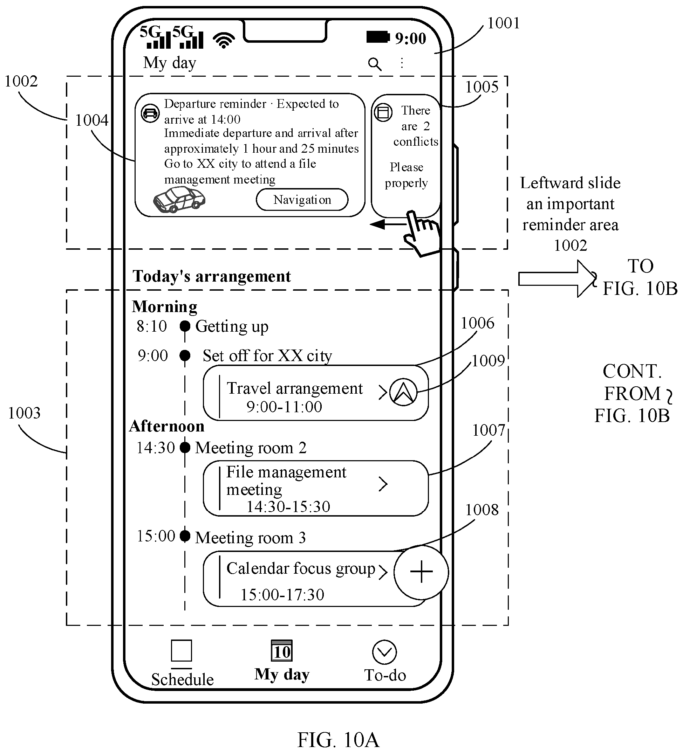

For example, the electronic device is a mobile phone, schedules created by the user include a travel schedule, and a conflicting schedule exists in a plurality of schedules created by the user. With reference to FIG. 10A, the mobile phone may display an interface 1001 corresponding to my day. The interface 1001 corresponding to my day may include an important reminder area 1002 and a travel arrangement area 1003. The important reminder area 1002 may be located in an upper part of the interface 1001 corresponding to my day, and the travel arrangement area 903 may be located in a lower part of the interface 1003 corresponding to my day.

The important reminder area 1002 may include a departure reminder card 1004. The departure reminder card 1004 may include departure information corresponding to a travel schedule. The departure information corresponding to the travel schedule may include a departure time (for example, an immediate departure), a destination (for example, XX city), a travel time (for example, arrival after approximately 1 hour and 25 minutes), a name of the travel schedule (for example, a file management meeting), and an expected arrival time (for example, expected to arrive at 14:00) that correspond to the travel schedule.

When the mobile phone displays the departure reminder card 1004 in the important reminder area 1002, as shown in FIG. 10A, the mobile phone may also display some content of a schedule conflict reminder card 1005 (namely, a reminder card whose priority is lower than that of the departure reminder card 1004) in the important reminder area 1002, so as to prompt the user that the schedule conflict reminder card 1005 may be displayed through leftward sliding.

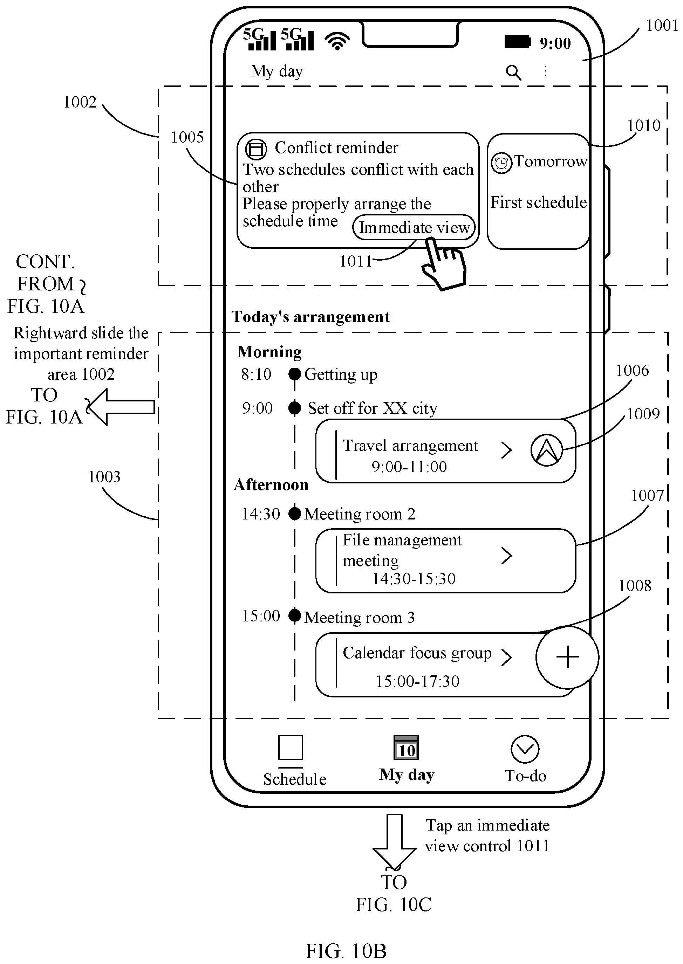

When the mobile phone receives the leftward sliding operation performed by the user on the important reminder area 1002, as a response, as shown in FIG. 10B, the mobile phone may display all content of the schedule conflict reminder card 1005 in the important reminder area 1002. In addition, the mobile phone may display some content of a tomorrow's schedule reminder card 1010 (namely, a reminder card whose priority is lower than that of the schedule conflict reminder card 1005) in the important reminder area 1002, so as to prompt the user that the tomorrow's schedule reminder card 1010 may be displayed through rightward sliding.

It should be noted that, when the mobile phone displays the important reminder area 1002 shown in FIG. 10B, if the mobile phone receives the rightward sliding operation performed by the user on the important reminder area 1002, as a response, as shown in FIG. 10A, the mobile phone may display the departure reminder card 1004 (namely, a reminder card whose priority is higher than that of the schedule conflict reminder card 1005) in the important reminder area 1002.

It should be noted that when the electronic device displays a plurality of reminder cards in the important reminder area, and the plurality of reminder cards include the important day reminder card, the birthday reminder card, and the weather reminder card, initial priorities of the important day reminder card and the birthday reminder card may be higher than a priority of the weather reminder card.

After the electronic device displays the important day reminder card and the birthday reminder card for a preset quantity of times (for example, twice) in the important reminder area in the interface corresponding to my day, the electronic device adjusts the priorities of the important day reminder card and the birthday reminder card to be lower than the priority of the weather reminder card.

In some examples, when the electronic device displays schedule information and a time axis of a plurality of schedules corresponding to the current date in the travel arrangement area, the electronic device may display the plurality of schedules corresponding to the current date by category based on a priority corresponding to each schedule. A priority corresponding to a schedule may include an important level, an ordinary level, and an ignore level.

In other words, when the electronic device displays the schedule information and the time axis of the plurality of schedules corresponding to the current date in the travel arrangement area, the travel arrangement area may include an important schedule area, an ordinary schedule area, and an ignore schedule area.

The important schedule area may be used to display schedule information, a time axis, and the like of a schedule whose priority is an important level. The ordinary schedule area may be used to display schedule information, a time axis, and the like of a schedule whose priority is an ordinary level. The ignore schedule area may be used to display schedule information, a time axis, and the like of a schedule whose priority is an ignore level.

In some examples, when the electronic device displays, in the travel arrangement area, the plurality of schedules corresponding to the current date by category based on a priority corresponding to each schedule, the electronic device may first display the important schedule area in the travel arrangement area. Then, when the electronic device receives a leftward sliding operation performed by the user on the travel arrangement area, the electronic device may display the ordinary schedule area in the travel arrangement area.

After the electronic device displays the ordinary schedule area in the travel arrangement area, if the electronic device receives a rightward sliding operation performed by the user on the travel arrangement area, the electronic device may display the important schedule area in the travel arrangement area. If the electronic device receives a leftward sliding operation performed by the user on the travel arrangement area, the electronic device may display the ignore schedule area in the travel arrangement area.

After the electronic device displays the ignore schedule area in the travel arrangement area, if the electronic device receives a rightward sliding operation performed by the user on the travel arrangement area, the electronic device may display the ordinary schedule area in the travel arrangement area.

To be specific, the electronic device may display a schedule of a first schedule priority in the travel arrangement area. After receiving a ninth operation (for example, a leftward sliding operation or a rightward sliding operation) of the user in the travel arrangement area, the electronic device may display a schedule of a second schedule priority in the travel arrangement area. The first schedule priority is different from the second schedule priority. The first schedule priority is any one of an important level, an ordinary level, or an ignore level, and the second schedule priority is any one of the important level, the ordinary level, or the ignore level.

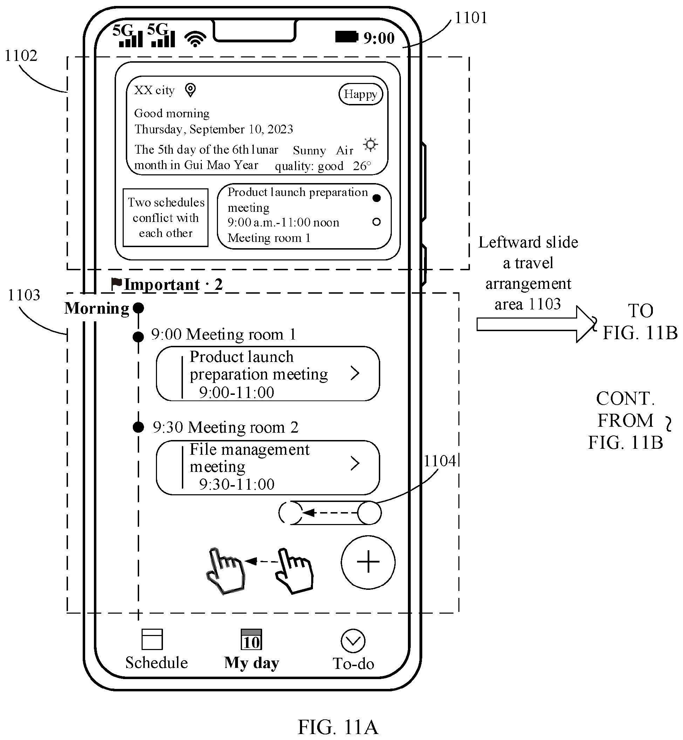

For example, again, the electronic device is a mobile phone. With reference to FIG. 11A, the mobile phone may display a my day interface 1101.

The my day interface 1101 may include an important reminder area 1102 and a travel arrangement area 1103. The important reminder area 1102 may be located in an upper part of the my day interface 1101, and the travel arrangement area 1103 may be located in a lower part of the my day interface 1101.

When the mobile phone displays, in the travel arrangement area 1103, a plurality of schedules created by the user, as shown in FIG. 11A, the mobile phone may first display an important schedule area in the travel arrangement area 1103. The important schedule area may include a schedule whose priority is an important level, for example, a product launch preparation meeting schedule (a time is 9:00 a.m. to 11:00 a.m.) and a file management meeting schedule (a time is 9:30 a.m. to 11:00 a.m.). As shown in FIG. 11A, the travel arrangement area 1103 may further include a sliding motion 1104 (for example, a leftward sliding motion). The sliding motion 1104 may be used to prompt the user that the travel arrangement area 1103 may be slid so that the travel arrangement area 1103 switches to display an ordinary schedule area.

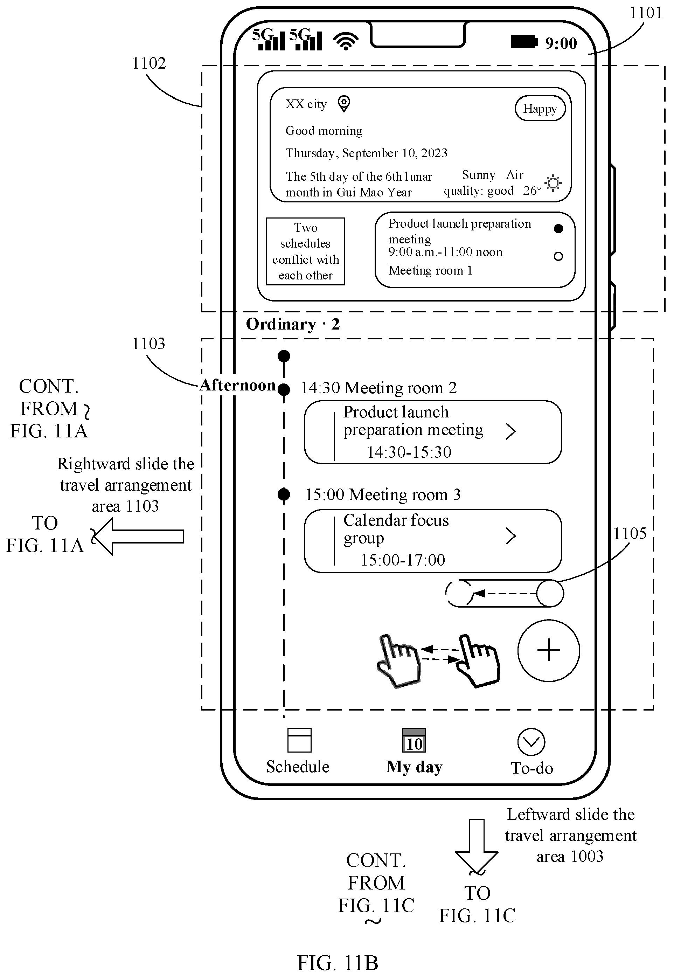

Then, when the mobile phone receives a leftward sliding operation performed by the user on the travel arrangement area 1103, as a response, as shown in FIG. 11B, the mobile phone may display the ordinary schedule area in the travel arrangement area 1103. The ordinary schedule area may include a schedule whose priority is an ordinary level, for example, a product launch preparation meeting schedule (a time is 14:30 p.m. to 15:00 p.m.) and a calendar focus group schedule (a time is 15:00 p.m. to 17:00 p.m.). As shown in FIG. 11B, the travel arrangement area 1103 may further include a sliding motion 1105 (for example, a leftward sliding motion or a rightward sliding motion). The sliding motion 1105 may be used to prompt the user that the travel arrangement area 1103 may be slid so that the travel arrangement area 1103 switches to display an ignore schedule area or switches to display an important schedule area.

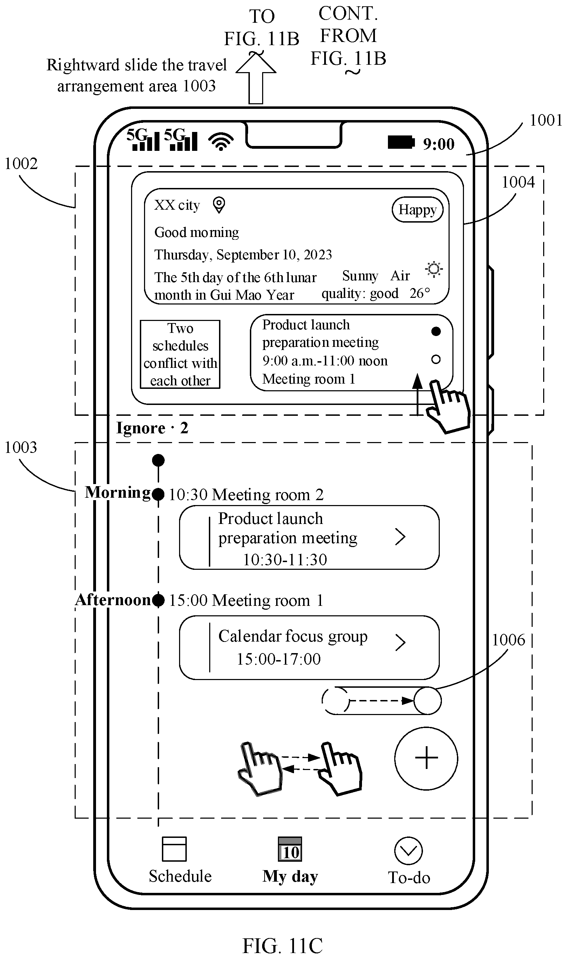

After the mobile phone displays the ordinary schedule area in the travel arrangement area 1103, if the mobile phone receives a rightward sliding operation performed by the user on the travel arrangement area 1103, as a response, as shown in FIG. 11A, the mobile phone may display the important schedule area in the travel arrangement area 1103. If the mobile phone receives a leftward sliding operation performed by the user on the travel arrangement area 1103, as a response, as shown in FIG. 11C, the mobile phone may display the ignore schedule area in the travel arrangement area. The ignore schedule area may include a schedule whose priority is an ignore level, for example, a product launch preparation meeting schedule (a time is 10:30 a.m. to 11:30 a.m.) and a calendar focus group schedule (a time is 15:00 p.m. to 17:00 p.m.). As shown in FIG. 11C, the travel arrangement area 1103 may further include a sliding motion 1106 (for example, a rightward sliding motion). The sliding motion 1106 may be used to prompt the user that the travel arrangement area 1103 may be slid so that the travel arrangement area 1103 switches to display an ordinary schedule area.

After the mobile phone displays the ignore schedule area in the travel arrangement area 1103, if the mobile phone receives a rightward sliding operation performed by the user on the travel arrangement area 1103, as a response, as shown in FIG. 11B, the mobile phone may display the ordinary schedule area in the travel arrangement area.

In some examples, when the electronic device displays schedule information and a time axis of a plurality of schedules corresponding to the current date in the travel arrangement area, the electronic device may display the plurality of schedules corresponding to the current date by category based on a completion status corresponding to each schedule.

To be specific, the travel arrangement area may include a completion control and a non-completion control. The completion control may be configured to trigger the electronic device to display a completed schedule corresponding to the current date in the travel arrangement area. The non-completion control may be configured to trigger the electronic device to display a non-completed schedule corresponding to the current date in the travel arrangement area. The completed schedule corresponding to the current date is a schedule for which the current time has exceeded an end time in the schedule corresponding to the current date. The non-completed schedule is a schedule for which the current time has not exceeded an end time in the schedule corresponding to the current date.

To be specific, when the electronic device displays schedule information of the completed schedule in the travel arrangement area, if the electronic device receives a trigger operation such as a tap operation performed by the user on the non-completion control (in this embodiment of this application, the trigger operation performed by the user on the non-completion control may also be referred to as an eleventh operation), the electronic device may display schedule information of the non-completed schedule in the travel arrangement area. Then, if the electronic device receives a trigger operation such as a tap operation performed by the user on the completion control (in this embodiment of this application, the trigger operation performed by the user on the non-completion control may also be referred to as a twelfth operation), the electronic device may display schedule information of the completed schedule in the travel arrangement area.

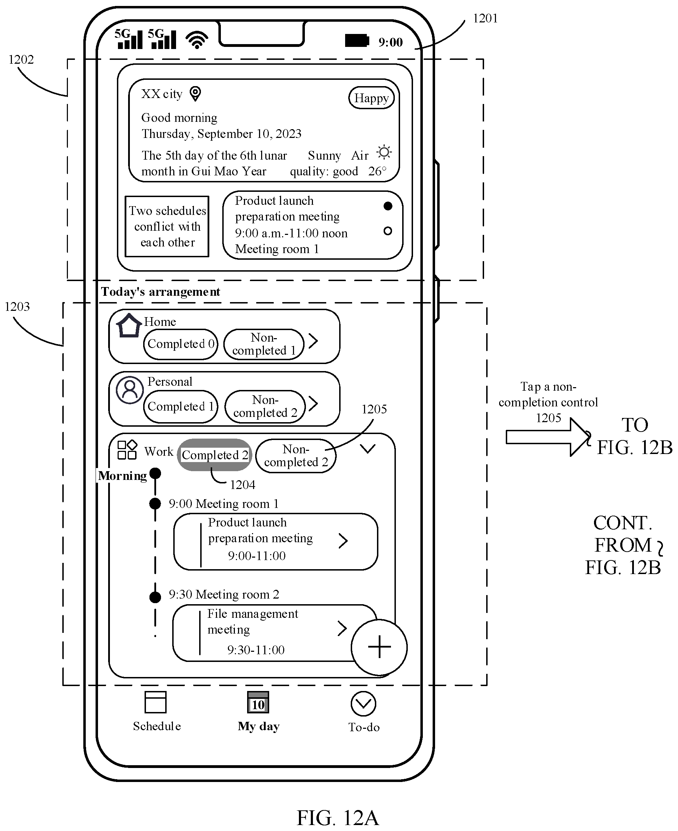

For example, again, the electronic device is a mobile phone. With reference to FIG. 12A, the mobile phone may display a my day interface 1201.

The my day interface 1201 may include an important reminder area 1202 and a travel arrangement area 1203. The important reminder area 1202 may be located in an upper part of the my day interface 1201, and the travel arrangement area 1203 may be located in a lower part of the my day interface 1201.

The travel arrangement area 1203 may include a completion control 1204 and a non-completion control 1205. The completion control 1204 may be configured to trigger the mobile phone to display a completed schedule corresponding to the current date in the travel arrangement area 1203. The non-completion control 1205 may be configured to trigger the mobile phone to display a non-completed schedule corresponding to the current date in the travel arrangement area 1203.

When the mobile phone displays the my day interface 1201, the mobile phone may display the completed schedule first by default, or may display the non-completed schedule corresponding to the current date first by default. In this embodiment of this application, description is provided by using an example in which the mobile phone may display the completed schedule corresponding to the current date first by default.

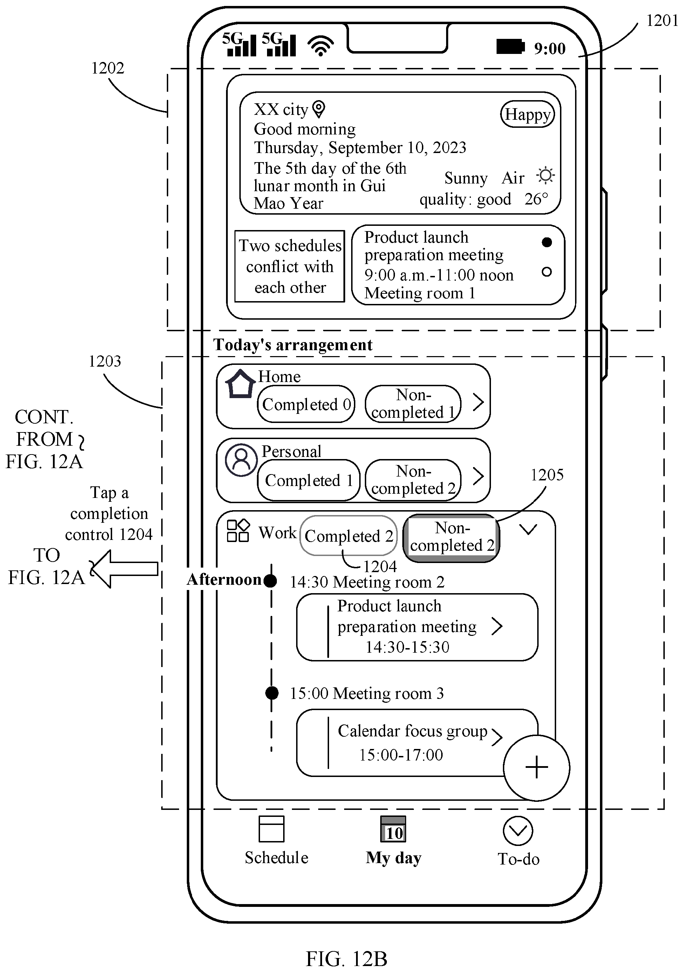

To be specific, when the mobile phone displays the my day interface 1201, the travel arrangement area 1203 can first display the completed schedule corresponding to the current date, for example, a product launch preparation meeting schedule (a time is 9:00 a.m. to 11:00 a.m.) and a file management meeting schedule (a time is 9:30 a.m. to 11:00 a.m.). Then, when the mobile phone receives a trigger operation such as a tap operation performed by the user on the non-completion control 1205, as a response, as shown in FIG. 12B, the mobile phone may display the non-completed schedule corresponding to the current date in the travel arrangement area 1203, for example, a product launch preparation meeting schedule (a time is 14:30 p.m. to 15:30 p.m.) and a calendar focus group schedule (a time is 15:00 p.m. to 17:00 p.m.).

After the mobile phone displays the non-completed schedule corresponding to the current date in the travel arrangement area 1203, if the mobile phone receives a trigger operation such as a tap operation performed by the user on the completion control, as a response, as shown in FIG. 12A, the mobile phone may display the completed schedule corresponding to the current date in the travel arrangement area 1203.

It should be noted that, as shown in FIG. 12A and FIG. 12A, when the mobile phone may display a plurality of schedules corresponding to the current date by category based on a completion status corresponding to each schedule, the mobile phone may further display the schedules by category based on a type of each schedule, for example, a home type, a personal type, and a work type. The travel arrangement area 1203 may include a home type card, a personal type card, and a work type card. The home type card may be used to trigger the mobile phone to display schedule information of a schedule whose type is the home type in the travel arrangement area 1203. The personal type card may be used to trigger the mobile phone to display schedule information of a schedule whose type is the personal type in the travel arrangement area 1203. The work type card may be used to trigger the mobile phone to display schedule information of a schedule whose type is the work type in the travel arrangement area 1203.

The home type card may include a completion control and a non-completion control. The completion control may trigger the mobile phone to display schedule information of a completed schedule in the home type schedules in the travel arrangement area 1203. The non-completion control may be configured to trigger the mobile phone to display schedule information of a non-completed schedule in the home type schedules in the travel arrangement area 1203.

The personal type card may include a completion control and a non-completion control. The completion control may trigger the mobile phone to display schedule information of a completed schedule in the personal type schedules in the travel arrangement area 1203. The non-completion control may be configured to trigger the mobile phone to display schedule information of a non-completed schedule in the personal type schedules in the travel arrangement area 1203.

The work type card may include a completion control and a non-completion control. The completion control may trigger the mobile phone to display schedule information of a completed schedule in the work type schedules in the travel arrangement area 1203. The non-completion control may be configured to trigger the mobile phone to display schedule information of a non-completed schedule in the work type schedules in the travel arrangement area 1203.

S504: The electronic device receives a trigger operation performed by the user on the schedule conflict reminder card.

After the electronic device displays the interface corresponding to my day, the electronic device may receive the trigger operation (which may also be referred to as a first operation in this embodiment of this application) performed by the user on the schedule conflict reminder card, so that the electronic device can display schedules in the first group of conflicting schedules (namely, schedule information of the first group of conflicting schedules) in the travel arrangement area or the important reminder area in a first display manner. The first display manner may be highlighting.

In some examples, the trigger operation performed by the user on the schedule conflict reminder card may be a tap operation performed by the user on the conflict reminder card.

For example, when the electronic device receives the trigger operation such as the tap operation performed by the user on the schedule conflict reminder card, the electronic device may highlight the schedules in the first group of conflicting schedules (namely, a group of conflicting schedules with an earliest start time in a plurality of groups of conflicting schedules) in the travel arrangement area in the interface corresponding to my day, so as to prompt the user that a conflicting schedule exists.

In some other examples, when the schedule conflict reminder card includes an immediate view control, the trigger operation performed by the user on the schedule conflict reminder card may be a trigger operation (for example, a tap operation) performed by the user on the immediate view control included in the conflict reminder card.

For example, when the electronic device receives the trigger operation such as the tap operation performed by the user on the immediate view control (which may also be referred to as a view control in this embodiment of this application) included in the schedule conflict reminder card, the electronic device may highlight the schedules in the first group of conflicting schedules (namely, a group of conflicting schedules with an earliest start time in a plurality of groups of conflicting schedules) in the travel arrangement area in the interface corresponding to my day, so as to prompt the user that a conflicting schedule exists.

It should be noted that, when the electronic device displays the plurality of schedule conflict reminder cards in the important reminder area, the electronic device receiving the trigger operation performed by the user on the schedule conflict reminder card may alternatively be the electronic device receiving a sliding operation (for example, leftward sliding or rightward sliding) of the user in the important reminder area.

S505: In response to the trigger operation performed by the user on the schedule conflict reminder card, the electronic device displays the schedule information of the first group of conflicting schedules in the travel arrangement area in the first display manner.

Conflicting schedules may include a plurality of groups of conflicting schedules. There is a time conflict or a place conflict between a plurality of schedules in each group of conflicting schedules.

When the conflicting schedules include a plurality of groups of conflicting schedules, the electronic device may first highlight the first group of conflicting schedules in the interface corresponding to my day. In this case, when the electronic device receives a switching operation of the user, the electronic device may highlight a second group of conflicting schedules in the interface corresponding to my day. The second group of conflicting schedules may be a group of conflicting schedules whose earliest start time is later than a latest end time of the first group of conflicting schedules. The earliest start time of the second group of conflicting schedules is a start time of a schedule with the earliest start time in the second group of conflicting schedules. The latest end time of the first group of conflicting schedules is an end time of a schedule with the latest end time in the first group of conflicting schedules.

In some examples, the switching operation of the user may be a sliding operation performed by the user on the travel arrangement area in the interface corresponding to my day. To be specific, after the electronic device highlights the first group of conflicting schedules in the interface corresponding to my day, if the electronic device receives an upward sliding operation of the user in the travel arrangement area in the interface corresponding to my day, the electronic device may highlight the second group of conflicting schedules in the interface corresponding to my day.

After the electronic device highlights the second group of conflicting schedules in the interface corresponding to my day, if the electronic device receives a downward sliding operation of the user in the travel arrangement area in the interface corresponding to my day, the electronic device may highlight the first group of conflicting schedules in the interface corresponding to my day.

In some other examples, the switching operation of the user may be another trigger operation (which may also be referred to as a second operation in this embodiment of this application) performed by the user on the immediate view control in the schedule conflict reminder card. To be specific, after the electronic device receives the trigger operation performed by the user on the immediate view control in the schedule conflict reminder card, the electronic device may highlight the first group of conflicting schedules in the interface corresponding to my day.

After the electronic device highlights the first group of conflicting schedules in the interface corresponding to my day, if the electronic device receives again the trigger operation performed by the user on the immediate view control in the schedule conflict reminder card, the electronic device may highlight the second group of conflicting schedules in the interface corresponding to my day. In other words, the electronic device may display the schedule information of the second group of conflicting schedules in the travel arrangement area in a second display manner. The second display manner may be the same as or different from the first display manner.

In some examples, when the trigger operation performed by the user on the schedule conflict reminder card is a tap operation performed by the user on the conflict reminder card, in response to the tap operation performed by the user on the schedule conflict reminder card, the electronic device may highlight a conflicting schedule in the travel arrangement area.

For example, still with reference to FIG. 6C, when the mobile phone displays the interface 603 corresponding to my day, the interface 603 corresponding to my day may include an important reminder area 604 and a travel arrangement area 605. The important reminder area 604 may include a schedule conflict reminder card 606.

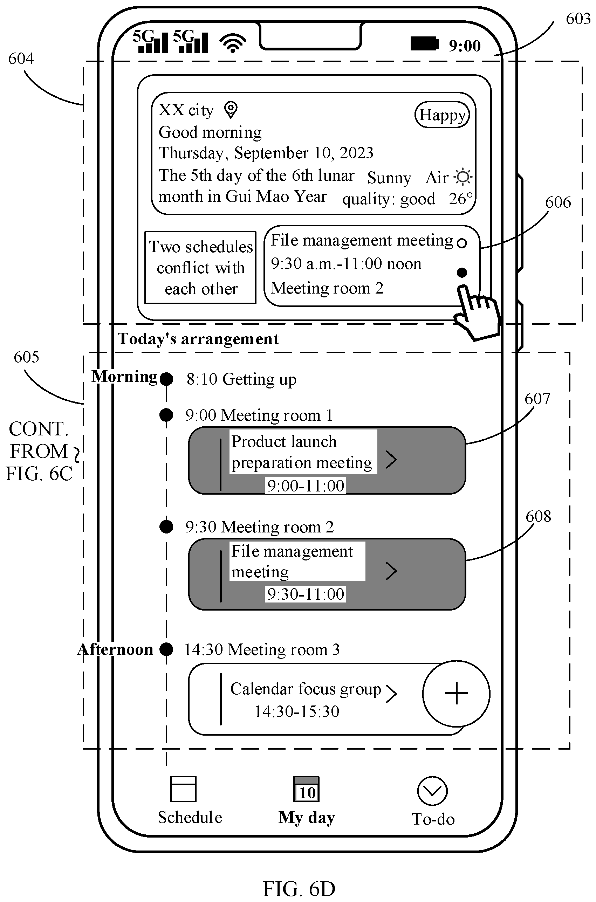

When the mobile phone receives a trigger operation such as a tap operation performed by the user on the schedule conflict reminder card 606, as a response, as shown in FIG. 6D, the mobile phone may highlight a conflicting schedule in the travel arrangement area 605, that is, highlight a product launch preparation meeting schedule 607 and a file management meeting schedule 608.

It should be noted that, if a plurality of groups of conflicting schedules exist in the schedules created by the user, when the mobile phone receives the trigger operation such as the tap operation performed by the user on the schedule conflict reminder card 606, as a response, as shown in FIG. 6D, the mobile phone may highlight an existent first group of conflicting schedules in the travel arrangement area 605, where the first group of conflicting schedules includes the product launch preparation meeting schedule 607 and the file management meeting schedule 608.

Then, when the mobile phone receives an upward sliding operation performed by the user on the travel arrangement area 605, the mobile phone may alternatively highlight a second group of conflicting schedules in the travel arrangement area 605.

In some other examples, when the schedule conflict reminder card includes an immediate view control, and the trigger operation performed by the user on the schedule conflict reminder card is a trigger operation (for example, a tap operation) performed by the user on the immediate view control included in the conflict reminder card, in response to the trigger operation (for example, the tap operation) performed by the user on the immediate view control included in the conflict reminder card, the electronic device may highlight a conflicting schedule in the travel arrangement area.

For example, still with reference to FIG. 10B, when the mobile phone displays all content of the schedule conflict reminder card 1005 in the important reminder area 1002, the schedule conflict reminder card may include an immediate view control 1011.

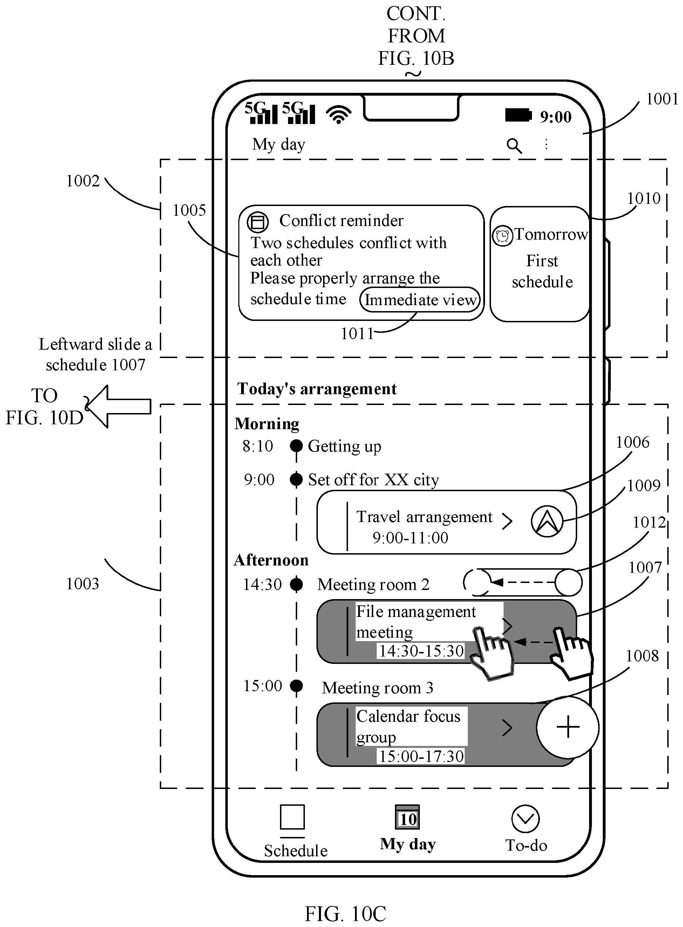

When the mobile phone receives a trigger operation such as a tap operation performed by the user on the immediate view control 1011, as a response, as shown in FIG. 10C, the mobile phone may highlight a conflicting schedule in the travel arrangement area 1003, that is, highlight a file management meeting schedule 1007 and a calendar focus group schedule 1008.

It should be noted that, as shown in FIG. 10C, when the travel arrangement area 1003 further includes a travel schedule 1006, the travel schedule 1006 may include a third-party application control, for example, a navigation application control 1009. Therefore, when the mobile phone receives a trigger operation performed by the user on the navigation application control 1009, the mobile phone may display an interface corresponding to a third-party application, for example, an interface corresponding to a navigation application, helping the user obtain a manner, a route, or the like for arriving at a destination corresponding to the travel schedule.

It should be noted that, if a plurality of groups of conflicting schedules exist in the schedules created by the user, when the mobile phone receives the trigger operation such as the tap operation performed by the user on the immediate view control 1011 in the schedule conflict reminder card 1005, as a response, as shown in FIG. 10C, the mobile phone may highlight an existent first group of conflicting schedules in the travel arrangement area 1003, where the first group of conflicting schedules includes the file management meeting schedule 1007 and the calendar focus group schedule 1008.

Then, when the mobile phone receives again the trigger operation such as the tap operation performed by the user on the immediate view control 1011 in the schedule conflict reminder card 1005, as a response, the mobile phone may alternatively highlight a second group of conflicting schedules in the travel arrangement area 1003.

It should be noted that when the electronic device highlights a conflicting schedule in the travel arrangement area, the electronic device may alternatively display a sliding motion (for example, a leftward sliding motion) in the travel arrangement area, so as to prompt the user that the conflicting schedule may be slid leftward to adjust a priority of the conflicting schedule. A specific location of the leftward sliding motion displayed in the travel arrangement area is not limited in this embodiment of this application.

For example, still with reference to FIG. 10C, when the mobile phone highlights a conflicting schedule in the travel arrangement area 1003, that is, highlights a file management meeting schedule 1007 and a calendar focus group schedule 1008, the mobile phone may alternatively display a leftward sliding motion 1012 in the travel arrangement area 1003, and the leftward sliding motion 1012 may be used to prompt the user that the conflicting schedule is slid leftward to adjust a priority of the conflicting schedule.

It should be noted that, when the electronic device displays the plurality of schedule conflict reminder cards in the important reminder area, the electronic device receiving the trigger operation performed by the user on the schedule conflict reminder card may alternatively be the electronic device receiving a sliding operation (for example, leftward sliding or rightward sliding) of the user in the important reminder area. When the electronic device receives the sliding operation of the user in the important reminder area, the electronic device may display the schedule information of the first group of conflicting schedules in the important reminder area in the first display manner, that is, the electronic device may display a schedule of a second conflicting schedule in the first group of conflicting schedules in the important reminder area.

S506: The electronic device receives a trigger operation performed by the user on the first conflicting schedule.

After the electronic device highlights the conflicting schedule in the travel arrangement area, the electronic device may receive the trigger operation such as a leftward sliding operation performed by the user on the first conflicting schedule (in this embodiment of this application, the trigger operation performed by the user on the first conflicting schedule may also be referred to as a fourth operation), so that the user can adjust a priority of the first conflicting schedule.

The first conflicting schedule may be any conflicting schedule in the conflicting schedules. When the conflicting schedules include a plurality of groups of conflicting schedules, the first conflicting schedule may be any conflicting schedule in any group of conflicting schedules. In this embodiment of this application, an example in which the first conflicting schedule may be any conflicting schedule included in a first group of conflicting schedules is used.

In some examples, a trigger operation performed by the user on the first conflicting schedule may be a leftward sliding operation performed by the user on the first conflicting schedule. When the electronic device receives the leftward sliding operation performed by the user on the conflicting schedule, the electronic device may display a plurality of priority options corresponding to the conflicting schedule in the travel arrangement area, so that the user can adjust a priority of the conflicting schedule. This can reduce an operation of the user for adjusting the priority of the conflicting schedule, thereby improving user experience.

In some examples, when the schedule conflict reminder card includes a priority marking control (in this embodiment of this application, the priority marking control may also be referred to as a priority adjustment control), the trigger operation performed by the user on the first conflicting schedule may alternatively be a trigger operation such as a tap operation performed by the user on the priority marking control included in the schedule conflict reminder card (in this embodiment of this application, the trigger operation performed by the user on the priority marking control included in the schedule conflict reminder card may also be referred to as a sixth operation).

In some examples, when the electronic device displays, in the travel arrangement area, the plurality of schedules corresponding to the current date by category based on a priority corresponding to each schedule, the trigger operation performed by the user on the first conflicting schedule may alternatively be a drag operation such as a leftward drag operation or a rightward drag operation performed by the user on the first conflicting schedule (in this embodiment of this application, the drag operation performed by the user on the first conflicting schedule may also be referred to as a ninth operation).

S507: In response to the trigger operation performed by the user on the first conflicting schedule, the electronic device displays a plurality of priority options corresponding to the first conflicting schedule.

When the electronic device receives the trigger operation performed by the user on the first conflicting schedule, as a response, the electronic device may display the plurality of priority options corresponding to the first conflicting schedule.

The plurality of priority options may include an important level option, an ordinary level option, and an ignore level option. To be specific, the priority of the first conflicting schedule may include an important level, an ordinary level, and an ignore level. The priority of the important level is higher than those of the ordinary level and the ignore level. The priority of the ordinary level is higher than that of the ignore level. A specific location of the plurality of priority options is not limited in this embodiment of this application.

The important level option may be used to trigger the electronic device to determine that the priority of the first conflicting schedule is the important level. When the electronic device determines that the priority of the first conflicting schedule is the important level, the electronic device may mark the first conflicting schedule as the important level (for example, an identifier corresponding to the important level is displayed in the first conflicting schedule), and the electronic device may further set a strong reminder for the first conflicting schedule. The electronic device setting a strong reminder for the first conflicting schedule means that when the electronic device prompts the first conflicting schedule, the electronic device may remind the first conflicting schedule in a manner of a plurality of times of a ringtone reminder, a vibration reminder, an interface reminder, and the like.

The ordinary level option may be used to trigger the electronic device to determine that the priority of the first conflicting schedule is the ordinary level. When the electronic device determines that the priority of the first conflicting schedule is the ordinary level, the electronic device may mark the first conflicting schedule as the ordinary level (for example, an identifier corresponding to the ordinary level is displayed in the first conflicting schedule), and the electronic device may further set an ordinary reminder for the first conflicting schedule. The electronic device setting an ordinary reminder for the first conflicting schedule means that when the electronic device prompts the first conflicting schedule, the electronic device may remind the first conflicting schedule in a manner of a single time of a ringtone reminder, a vibration reminder, an interface reminder, and the like.

The ignore level option may be used to trigger the electronic device to determine that the priority of the first conflicting schedule is the ignore level. When the electronic device determines that the priority of the first conflicting schedule is the ignore level, the electronic device may ignore the first conflicting schedule. The electronic device ignoring the first conflicting schedule may be that the electronic device does not perform an operation such as reminding on the first conflicting schedule, or may be that the electronic device cancels the first conflicting schedule (for example, outputs the first conflicting schedule), or may be that highlighting of the first conflicting schedule is cancelled to prompt the user that the first conflicting schedule is adjusted to a non-conflicting schedule, or may be that the first conflicting schedule is marked as the ignore level (for example, an identifier corresponding to the ignore level is displayed in the first conflicting schedule).

It should be noted that when the electronic device displays a plurality of priority options corresponding to the first conflicting schedule in the travel arrangement area, the electronic device may display, in the travel arrangement area, identifiers (for example, icons or texts) respectively corresponding to the plurality of priority options corresponding to the first conflicting schedule. To be specific, the electronic device may display, in the travel arrangement area, the identifier of the important level, the identifier of the ordinary level, and the identifier of the ignore level that correspond to the first conflicting schedule.

In some examples, when the trigger operation performed by the user on the first conflicting schedule is the leftward sliding operation performed by the user on the first conflicting schedule, when the electronic device receives the leftward sliding operation performed by the user on the first conflicting schedule, as a response, the electronic device may display the plurality of priority options corresponding to the first conflicting schedule.

For example, still with reference to FIG. 10C, when the mobile phone highlights a conflicting schedule in the travel arrangement area 1003, that is, highlights a file management meeting schedule 1007 and a calendar focus group schedule 1008, the mobile phone may alternatively display a leftward sliding motion 1012 in the travel arrangement area 1003, and the leftward sliding motion 1012 may be used to prompt the user that the conflicting schedule is slid leftward to adjust a priority of the conflicting schedule.

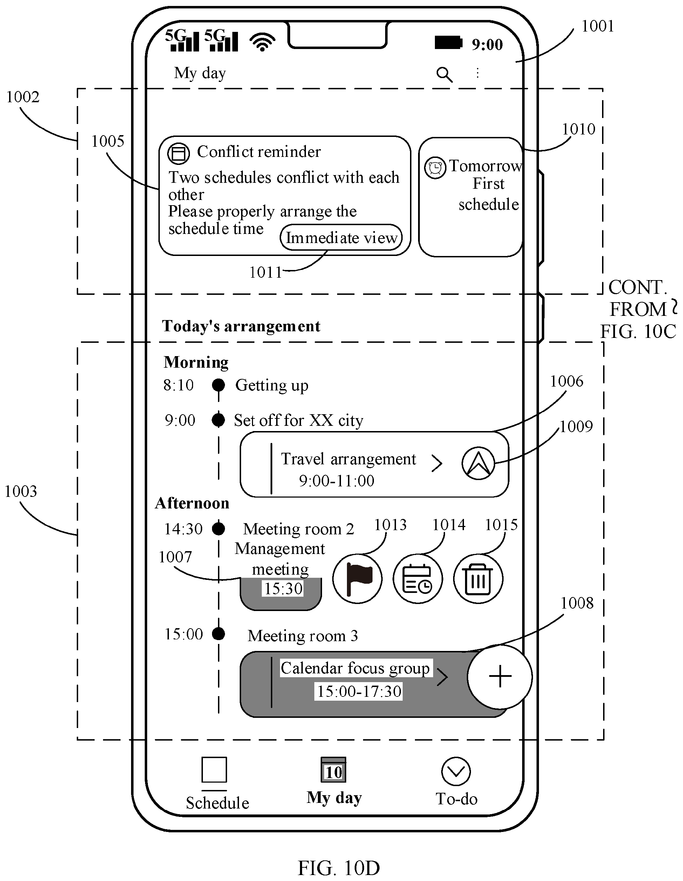

When the mobile phone receives a leftward sliding operation performed by the user on the file management meeting schedule 1007 (namely, the first conflicting schedule), as a response, as shown in FIG. 10D, the mobile phone may display a plurality of priority options corresponding to the file management meeting schedule 1007 in the travel arrangement area 1003, namely, an important level option 1013, an ordinary level option 1014, and an ignore level option 1015.

It should be noted that, as shown in FIG. 10D, when the mobile phone displays the plurality of priority options corresponding to the file management meeting schedule 1007 in the travel arrangement area 1003, the mobile phone may display some content of the file management meeting schedule 1007 in the travel arrangement area 1003, so that the important level option 1013, the ordinary level option 1014, and the ignore level option 1015 that correspond to the file management meeting schedule 1007 can be displayed at an empty location corresponding to the file management meeting schedule 1007.

In some other examples, when the schedule conflict reminder card includes a priority marking control, the trigger operation performed by the user on the first conflicting schedule is a trigger operation such as a tap operation performed by the user on the priority marking control included in the schedule conflict reminder card. When the electronic device receives the tap operation performed by the user on the priority marking control included in the schedule conflict reminder card, as a response, the electronic device may display the plurality of priority options corresponding to the first conflicting schedule.

For example, again, the electronic device is a mobile phone. With reference to FIG. 8A, the mobile phone may display a my day interface 801.

The my day interface 801 may include an important reminder area 802 and a travel arrangement area 803. The important reminder area 802 may be located in an upper part of the my day interface 801, and the travel arrangement area 803 may be located in a lower part of the my day interface 801.

The important reminder area 802 may include a first schedule conflict reminder card 804. The first conflicting schedule reminder card 804 may be a schedule conflict reminder card corresponding to a product launch preparation meeting schedule (namely, the first conflicting schedule). The first schedule conflict reminder card 804 may include a priority marking control 805, and the priority marking control 805 may be configured to trigger the mobile phone to display a plurality of priority options corresponding to the product launch preparation meeting schedule.

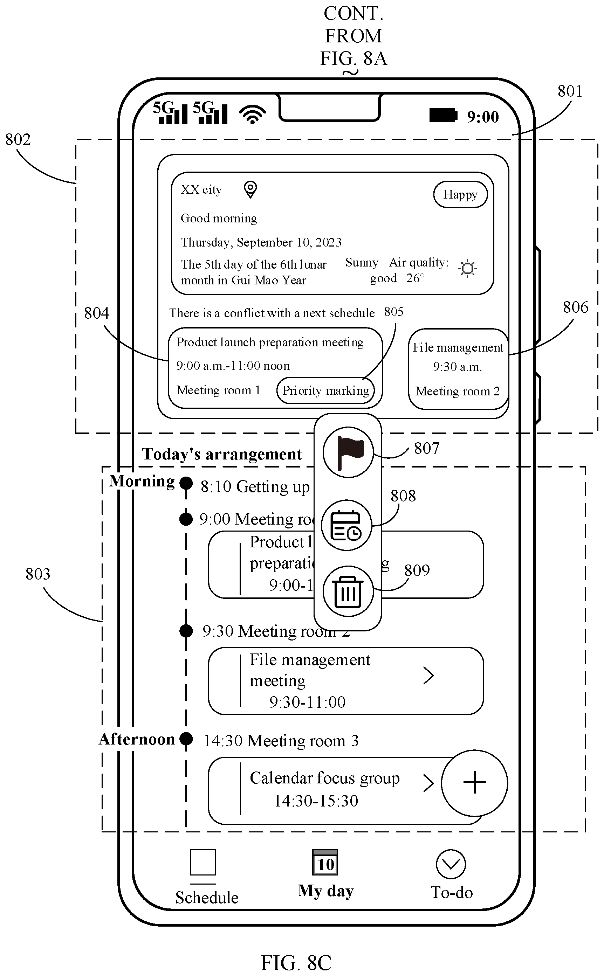

When the mobile phone receives the tap operation performed by the user on the priority marking control 805, as a response, as shown in FIG. 8C, the mobile phone may display a plurality of priority options corresponding to the product launch preparation meeting schedule, for example, an important level option 807, an ordinary level option 808, and an ignore level option 809. Therefore, the user may adjust a priority corresponding to the product launch preparation meeting schedule by using the plurality of priority options corresponding to the product launch preparation meeting schedule.

For example, when the mobile phone receives a trigger operation such as a tap operation performed by the user on the important level option 807 (in this embodiment of this application, the trigger operation performed by the user on the important level 807 may also be referred to as a seventh operation), the mobile phone may adjust the priority corresponding to the product launch preparation meeting schedule to the important level.

It should be noted that when the electronic device displays, in the travel arrangement area, the plurality of schedules corresponding to the current date by category based on a priority (namely, a schedule priority) corresponding to each schedule, the trigger operation performed by the user on the first conflicting schedule may be a drag operation such as a leftward drag operation or a rightward drag operation performed by the user on the first conflicting schedule. When the electronic device receives the drag operation performed by the user on the first conflicting schedule, the electronic device may correspondingly adjust the first conflicting schedule based on the drag operation (the leftward drag operation or the rightward drag operation) performed by the user on the first conflicting schedule.

To be specific, when the electronic device displays a schedule of a first schedule priority (for example, an important level) in the travel arrangement area, if the electronic device receives a drag operation such as leftward dragging or rightward dragging performed by the user on a first schedule (the first schedule may be any one of schedules of the important level, or may be a conflicting schedule of the important level, such as a first conflicting schedule) (in this embodiment of this application, the drag operation performed by the user on the first schedule may also be referred to as a tenth operation), the electronic device may adjust the schedule priority of the first schedule to a second schedule priority (for example, the ordinary level), and display the schedule of the second schedule priority (for example, a schedule of the ordinary level) in the travel arrangement area, where the schedule of the second schedule priority includes the first schedule.

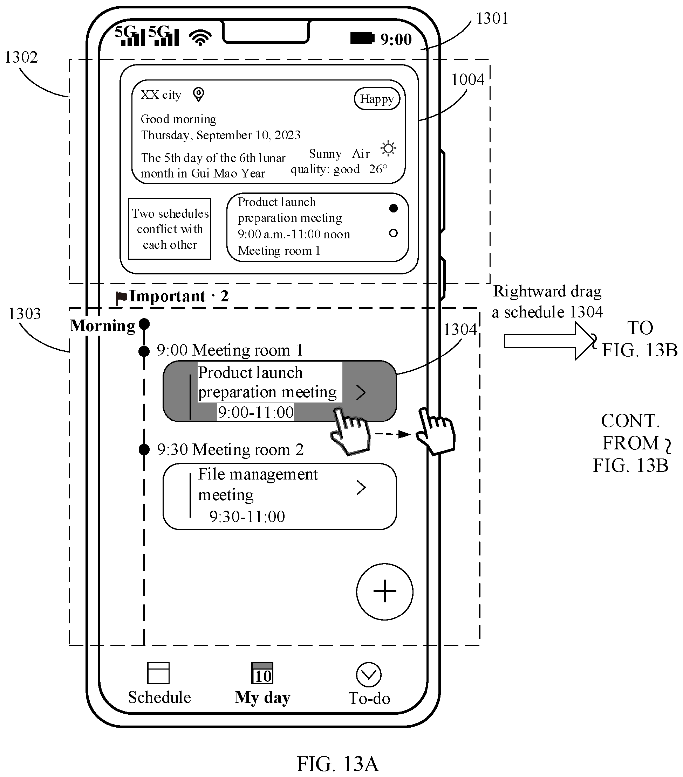

For example, again, the electronic device is a mobile phone. With reference to FIG. 13A, the mobile phone may display a my day interface 1301.

The my day interface 1301 may include an important reminder area 1302 and a travel arrangement area 1303. The important reminder area 1302 may be located in an upper part of the my day interface 1301, and the travel arrangement area 1303 may be located in a lower part of the my day interface 1301.

When the mobile phone displays, in the travel arrangement area 1303, a plurality of schedules created by the user, as shown in FIG. 13A, the mobile phone may first display an important schedule area in the travel arrangement area 1303. The important schedule area may include a schedule whose priority is an important level, for example, a product launch preparation meeting schedule 1304 (a time is 9:00 a.m. to 11:00 a.m.) and a file management meeting schedule (a time is 9:30 a.m. to 11:00 a.m.).

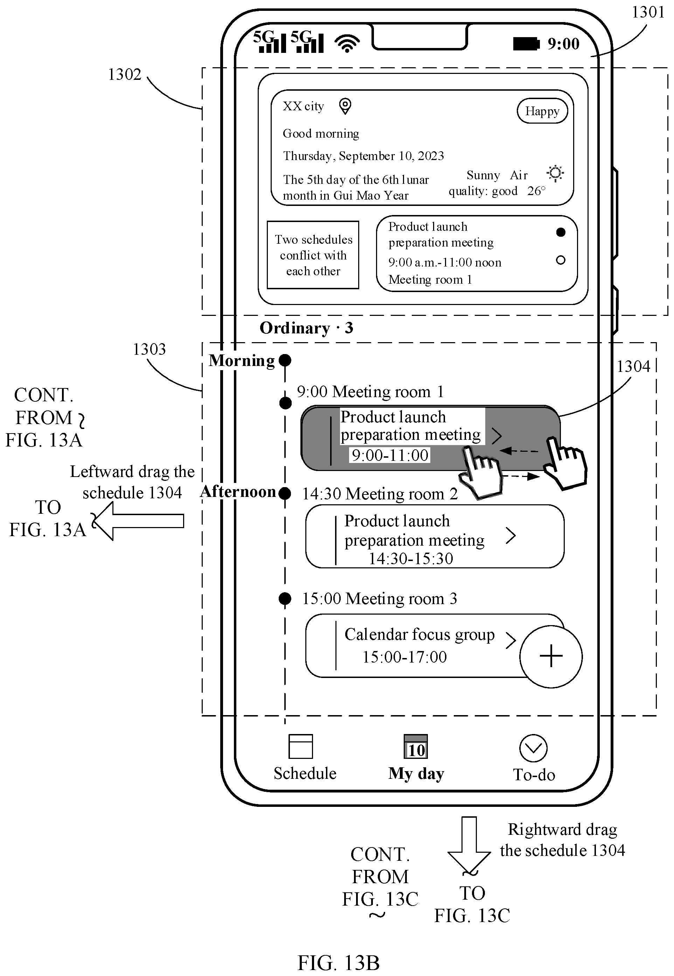

Then, when the mobile phone receives a rightward drag operation performed by the user on the product launch preparation meeting schedule 1304 (namely, a first conflicting schedule), as a response, as shown in FIG. 13B, the mobile phone may display an ordinary schedule area in the travel arrangement area 1303. The ordinary schedule area may include a schedule whose priority is an ordinary level, for example, a product launch preparation meeting schedule 1304 (a time is 9:00 a.m. to 11:00 a.m.), namely, the first conflicting schedule. The ordinary schedule area may further include another schedule whose priority is an ordinary level, for example, a product launch preparation meeting schedule (a time is 14:30 p.m. to 15:30 p.m.) and a calendar focus group schedule (a time is 15:00 p.m. to 17:00 p.m.).

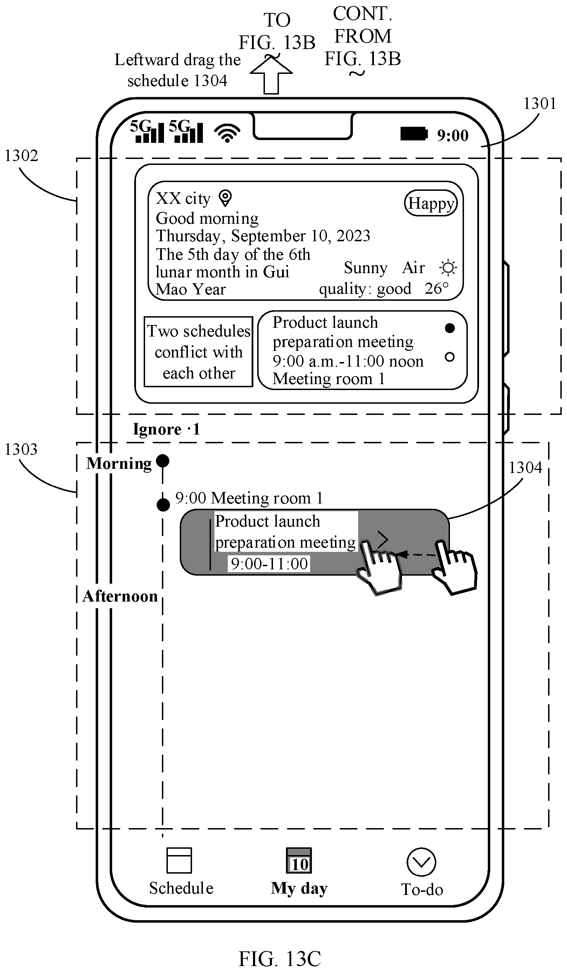

As shown in FIG. 13B, after the mobile phone displays the ordinary schedule area in the travel arrangement area 1303, if the mobile phone receives a rightward drag operation performed by the user on the product launch preparation meeting schedule 1304 (namely, the first conflicting schedule), as a response, as shown in FIG. 13C, the mobile phone may display an ignore schedule area in the travel arrangement area 1303. The ignore schedule area may include a schedule whose priority is an ignore level, for example, a product launch preparation meeting schedule 1304 (9:00 a.m. to 11:00 a.m.), namely, the first conflicting schedule. The ignore schedule area may further include another schedule whose priority is an ignore level.

As shown in FIG. 13B, after the mobile phone displays the ordinary schedule area in the travel arrangement area 1303, if the mobile phone receives a leftward drag operation performed by the user on the product launch preparation meeting schedule 1304 (namely, the first conflicting schedule), as a response, as shown in FIG. 13A, the mobile phone may display an important schedule area in the travel arrangement area 1303. The important schedule area may include a schedule whose priority is an important level, for example, a product launch preparation meeting schedule 1304 (a time is 9:00 a.m. to 11:00 a.m.), namely, the first conflicting schedule. The important schedule area may further include another schedule whose priority is an important level, for example, a file management meeting schedule (a time is 9:30 a.m. to 11:00 a.m.).

As shown in FIG. 13C, after the mobile phone displays the ignore schedule area in the travel arrangement area 1303, if the mobile phone receives a leftward drag operation performed by the user on the product launch preparation meeting schedule 1304 (namely, the first conflicting schedule), as a response, as shown in FIG. 13B, the mobile phone may display an ordinary schedule area in the travel arrangement area 1303. The ordinary schedule area may include a schedule whose priority is an ordinary level, for example, a product launch preparation meeting schedule 1304 (a time is 9:00 a.m. to 11:00 a.m.), namely, the first conflicting schedule. The ordinary schedule area may further include another schedule whose priority is an ordinary level, for example, a product launch preparation meeting schedule (a time is 14:30 p.m. to 15:30 p.m.) and a calendar focus group schedule (a time is 15:00 p.m. to 17:00 p.m.).

S508: The electronic device receives a trigger operation performed by the user on a first priority option.

After the electronic device displays, in the travel arrangement area, a plurality of priority options corresponding to the first conflicting schedule (in this embodiment of this application, the plurality of priority options may also be referred to as a plurality of schedule priority options), the electronic device may receive a trigger operation performed by the user on the first priority option (in this embodiment of this application, the first priority option may also be referred to as a first schedule priority option) (in this embodiment of this application, the trigger operation performed by the user on the first priority option may also be referred to as a fifth operation), so that the electronic device can adjust the priority of the first conflicting schedule to the priority corresponding to the first priority option.

The first priority option may be any one of the plurality of priority options. To be specific, the first priority option may be an important level option, or may be an ordinary level option, or may be an ignore level option.

S509: In response to the trigger operation performed by the user on the first priority option, the electronic device adjusts the priority of the first conflicting schedule to the priority corresponding to the first priority option.

After the electronic device receives the trigger operation performed by the user on the first priority option, as a response, the electronic device may adjust the priority of the first conflicting schedule to the priority corresponding to the first priority option.

After the electronic device adjusts the priority of the first conflicting schedule to the priority corresponding to the first priority option, the electronic device may perform processing corresponding to the first priority option on the first conflicting schedule.

The electronic device performing processing corresponding to the first priority option on the first conflicting schedule may include: When the priority of the first conflicting schedule is the important level, the electronic device may mark the first conflicting schedule as the important level (for example, an identifier corresponding to the important level is displayed in the first conflicting schedule), and the electronic device may further set a strong reminder for the first conflicting schedule. The electronic device sets a strong reminder for the first conflicting schedule.

When the priority of the first conflicting schedule is the ordinary level, the electronic device may mark the first conflicting schedule as the ordinary level (for example, an identifier corresponding to the ordinary level is displayed in the first conflicting schedule), and the electronic device may further set an ordinary reminder for the first conflicting schedule.

When the priority of the first conflicting schedule is the ignore level, the electronic device may ignore the first conflicting schedule. To be specific, the electronic device may not perform an operation such as reminding on the first conflicting schedule; the electronic device may alternatively cancel the first conflicting schedule (for example, output the first conflicting schedule); the electronic device may alternatively cancel highlighting of the first conflicting schedule to prompt the user that the first conflicting schedule is adjusted to a non-conflicting schedule; or the electronic device may alternatively mark the first conflicting schedule as the ignore level (for example, display an identifier corresponding to the ignore level in the first conflicting schedule).

In the solution of this application, after the electronic device creates a plurality of schedules by using the schedule management application (for example, the calendar application), the electronic device may receive a first trigger operation of the user. The electronic device displays an interface corresponding to my day. The interface corresponding to my day includes an important reminder area and a travel arrangement area. The important reminder area is used to display a plurality of reminder cards, the plurality of reminder cards may include a schedule conflict reminder card, and the travel arrangement area may be used to display schedule information of a plurality of schedules created by the user.

In the solution of this application, when there is a conflict between the schedules created by the user, a schedule conflict reminder card is displayed in the important reminder area of the electronic device, so as to remind the user that a conflicting schedule exists in the created schedules. In addition, when responding to the operation performed by the user on the schedule conflict reminder card, the electronic device may display schedule information of a first group of conflicting schedules in the travel arrangement area or the important reminder area in a first display manner. In this way, when a plurality of groups of conflicting schedules exist in the schedules created by the user, the electronic device may display schedule information of the conflicting schedules by group in the travel arrangement area or the important reminder area, so that the user can clearly distinguish various groups of conflicting schedules, thereby avoiding a case that the user cannot distinguish which schedules conflict with each other, and improving user experience.

An embodiment of this application further provides a schedule display apparatus corresponding to the method in the foregoing embodiment. The schedule display apparatus may be applied to an electronic device, and is configured to implement the method in the foregoing embodiment. Functions of the schedule display apparatus may be implemented by hardware or may be implemented by corresponding software executed by hardware. The hardware or software includes one or more modules corresponding to the foregoing functions, so as to implement the foregoing schedule display method.

It should be understood that division into units or modules (referred to as units in the following) in the apparatus is merely logical function division. In an actual implementation, all or some of the units or modules may be integrated into one physical entity, or may be physically separated. In addition, the units in the apparatus may be all implemented in a form of software invoked by a processing element or may be all implemented in a form of hardware, or some units may be implemented in a form of software invoked by a processing element and some units are implemented in a form of hardware.

For example, the units may be separately disposed processing elements, or may be integrated into a specific chip in the apparatus for implementation. In addition, the units may alternatively be stored in a memory in a form of a program, and invoked by a specific processing element of the apparatus to perform functions of the units. In addition, all or some of these units may be integrated together, or may be implemented independently. The processing element described herein may also be referred to as a processor, and may be an integrated circuit that has a signal processing capability. In an implementation process, the steps in the foregoing method or the foregoing units may be implemented by using a hardware integrated logic circuit in a processor element, or may be implemented by software invoked by the processing element.

In one example, the units in the foregoing apparatus may be one or more integrated circuits configured to implement the foregoing method, for example, one or more ASICs, one or more DSPs, one or more FPGAs, or a combination of at least two of these integrated circuit forms.

For another example, when the units in the apparatus may be implemented by scheduling a program by using the processing element, the processing element may be a generalpurpose processor, for example, a CPU or another processor that can invoke the program. For another example, these units may be integrated together and implemented in a form of a system on chip SOC.

In an implementation, the units that are in the foregoing apparatus and that implement corresponding steps in the foregoing method may be implemented in a form of scheduling a program by using the processing element. For example, the apparatus may include a processing element and a storage element, and the processing element invokes a program stored in the storage element to perform the method described in the foregoing method embodiment. The storage element may be a storage element that is on a same chip as the processing element, namely, an on-chip storage element.

In another implementation, the program used to perform the foregoing method may be on a storage element that is located on a different chip from the processing element, namely, an off-chip storage element. In this case, the processing element invokes or displays the program from the off-chip storage element onto the on-chip storage element, to invoke and perform the method described in the foregoing method embodiment.

For example, an embodiment of this application may further provide an apparatus, for example, an electronic device. The electronic device may include a processor and a memory configured to store instructions executable by the processor. The processor is configured to enable, when executing the instructions, the electronic device to implement the schedule display method described in the foregoing embodiment. The memory may be located inside the electronic device or may be located outside the electronic device. In addition, there are one or more processors.

In still another implementation, the units that are in the apparatus and that implement the steps in the foregoing method may be configured as one or more processing elements, and these processing elements may be disposed on the corresponding electronic device described above. The processing elements herein may be integrated circuits, for example, one or more ASICs, one or more DSPs, one or more FPGAs, or a combination of these types of integrated circuits. These integrated circuits may be integrated together to form a chip.

For example, an embodiment of this application further provides a chip, and the chip may be applied to the foregoing electronic device. The chip includes one or more interface circuits and one or more processors. The interface circuit and the processor are interconnected by using a line. The processor receives computer instructions from the memory of the electronic device through the interface circuit and executes the computer instructions, to implement the method described in the foregoing method embodiment.

An embodiment of this application further provides a computer program product, including the computer instructions run by the electronic device.

Through the descriptions of the foregoing implementations, a person skilled in the art may clearly understand that for the purpose of convenient and brief description, only division into the foregoing functional modules is used as an example for description. In actual application, the functions may be allocated to and completed by different functional modules based on a requirement. In other words, an internal structure of the apparatus is divided into different functional modules, to complete all or some of the functions described above.

In the several embodiments provided in this application, it should be understood that the disclosed apparatus and method may be implemented in other manners. For example, the apparatus embodiments described above are merely examples. For example, division into modules or units is merely logical function division. In an actual implementation, there may be another division manner. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or the units may be implemented in electronic, mechanical, or other forms.

The units described as separate parts may or may not be physically separate, and parts displayed as units may be one or more physical units, in other words, may be located in one place, or may be distributed in a plurality of different places. Some or all of the units may be selected based on actual requirements to achieve the objectives of the solutions in the embodiments.

In addition, the functional units in the embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions in the embodiments of this application essentially, or the part contributing to the related technology, or all or some of the technical solutions may be implemented in a form of a software product, for example, a program. The software product is stored in a program product, for example, a computer-readable storage medium, including several instructions for instructing a device (which may be a single-chip microcomputer, a chip, or the like) or a processor (processor) to perform all or some of the steps of the method in the embodiments of this application. The foregoing storage medium includes any medium that can store program code, for example, a USB flash drive, a removable hard disk, a ROM, a RAM, a magnetic disk, or an optical disc.

For example, an embodiment of this application may further provide a computer-readable storage medium, and the computer-readable storage medium stores computer program instructions. When the computer program instructions are executed by an electronic device, the electronic device is enabled to implement the schedule display method described in the foregoing method embodiment.

The foregoing descriptions are merely specific implementations of this application, but are not intended to limit the protection scope of this application. Any change or replacement made within the technical scope disclosed in this application shall fall within the protection scope of this application. Therefore, the protection scope of this application shall be subject to the protection scope of the claims.

## Claims

1. A schedule display method, applied to an electronic device, wherein the method comprises:
displaying a first interface, wherein the first interface comprises an important reminder area and a travel arrangement area, the important reminder area is used to display a plurality of reminder cards, the plurality of reminder cards comprise a schedule conflict reminder card, and the travel arrangement area is used to display schedule information of a plurality of schedules created by a user;
receiving a first operation performed by the user on the schedule conflict reminder card; and
displaying schedule information of a first group of conflicting schedules in the travel arrangement area or the important reminder area in a first display manner in response to the first operation.

2. The method according to claim 1, wherein the schedule conflict reminder card comprises a view control, and the method further comprises:
receiving a second operation performed by the user on the view control; and
displaying schedule information of a second group of conflicting schedules in the travel arrangement area in a second display manner in response to the second operation.

3. The method according to claim 1, wherein card priorities of the plurality of reminder cards are different, and when the plurality of reminder cards are displayed in the important reminder area, the plurality of reminder cards are sequentially displayed in an order of the card priorities of the plurality of reminder cards.

4. The method according to claim 3, wherein before the displaying a first interface, the method further comprises:
displaying a first reminder card in the important reminder area, wherein a card priority of the first reminder card is higher than a card priority of the schedule conflict reminder card;
receiving a third operation of the user in the important reminder area; and
displaying the schedule conflict reminder card in the important reminder area in response to the third operation.

5. The method according to claim 4, wherein the plurality of reminder cards further comprise a departure reminder card, a tomorrow's schedule reminder card, a weather reminder card, an important day reminder card, and a birthday reminder card; initial card priorities of the plurality of reminder cards in descending order are sequentially as follows: the departure reminder card, the schedule conflict reminder card, the birthday reminder card, the important day reminder card, the tomorrow's schedule reminder card, and the weather reminder card.

6. The method according to any one of claims 1-5, wherein the first group of conflicting schedules comprises a first conflicting schedule, and the method further comprises:
receiving a fourth operation performed by the user on the first conflicting schedule;
displaying a plurality of schedule priority options corresponding to the first conflicting schedule in response to the fourth operation, wherein the plurality of schedule priority options comprise an important level option, an ordinary level option, and an ignore level option;
receiving a fifth operation performed by the user on a first schedule priority option, wherein the first schedule priority option is any option in the plurality of schedule priority options; and
adjusting, in response to the fifth operation, a schedule priority of the first conflicting schedule to a schedule priority corresponding to the first schedule priority option.

7. The method according to claim 1, wherein the schedule conflict reminder card comprises a first schedule conflict reminder card, the first schedule conflict reminder card is used to display schedule information of the first conflicting schedule in the first group of conflicting schedules, the first schedule conflict reminder card comprises a schedule priority adjustment control, and the method further comprises:
receiving a sixth operation performed by the user on the schedule priority adjustment control;
displaying a plurality of schedule priority options corresponding to the first conflicting schedule in response to the sixth operation, wherein the plurality of schedule priority options comprise an important level option, an ordinary level option, and an ignore level option;
receiving a seventh operation performed by the user on a first schedule priority option, wherein the first schedule priority option is any option in the plurality of schedule priority options; and
adjusting, in response to the seventh operation, a schedule priority of the first conflicting schedule to a schedule priority corresponding to the first schedule priority option.

8. The method according to claim 7, wherein the schedule conflict reminder card further comprises a second schedule conflict reminder card, the second schedule conflict reminder card is used to display schedule information of the second conflicting schedule in the first group of conflicting schedules, and the method further comprises:
when the first schedule conflict reminder card is displayed in the important reminder area, receiving an eighth operation of the user in the important reminder area; and
displaying the second schedule conflict reminder card in the important reminder area in response to the eighth operation.

9. The method according to any one of claims 1-5, wherein the method further comprises:
when schedule information of a schedule of a first schedule priority is displayed in the travel arrangement area, receiving a ninth operation of the user in the travel arrangement area; and
displaying schedule information of a schedule of a second schedule priority in the travel arrangement area in response to the ninth operation, wherein the first schedule priority is different from the second schedule priority.

10. The method according to claim 9, wherein the first schedule priority is any one of an important level, an ordinary level, or an ignore level, and the second schedule priority is any one of the important level, the ordinary level, or the ignore level.

11. The method according to claim 10, wherein the schedule of the first schedule priority comprises a first schedule, and the method further comprises:
when the schedule information of the schedule of the first schedule priority is displayed in the travel arrangement area, receiving a tenth operation performed by the user on the first schedule; and
adjusting, in response to the tenth operation, a schedule priority of the first schedule to the second schedule priority, and displaying the schedule information of the schedule of the second schedule priority in the travel arrangement area, wherein the schedule information of the schedule of the second schedule priority comprises schedule information of the first schedule.

12. The method according to any one of claims 1-5, wherein the travel arrangement area comprises a completion control and a non-completion control, and the method further comprises:
when schedule information of a completed schedule is displayed in the travel arrangement area, receiving an eleventh operation performed by the user on the non-completion control;
displaying schedule information of a non-completed schedule in the travel arrangement area in response to the eleventh operation;
receiving a twelfth operation performed by the user on the completion control; and
displaying the schedule information of the completed schedule in the travel arrangement area in response to the twelfth operation.

13. The method according to any one of claims 1-5, wherein the displaying a first interface comprises:
displaying a second interface of a schedule management application, wherein the second interface comprises a first control;
receiving a thirteenth operation performed by the user on the first control; and
displaying the first interface in response to the thirteenth operation.

14. The method according to claim 1, wherein the displaying a first interface comprises:
displaying a third interface, wherein the third interface comprises a schedule reminder card;
receiving a fourteenth operation performed by the user on the schedule reminder card; and
displaying the first interface in response to the fourteenth operation.

15. The method according to claim 14, wherein the first interface comprises a first date control and a second date control, and the method further comprises:
when the first interface displays schedule information corresponding to a first date, receiving a fifteenth operation performed by the user on the second date control;
displaying schedule information corresponding to a second date in response to the fifteenth operation;
when the first interface displays the schedule information corresponding to the second date, receiving a sixteenth operation performed by the user on the second date control; and
displaying the schedule information corresponding to the first date in response to the sixteenth operation.

16. An electronic device, wherein the electronic device comprises a processor and a memory configured to store instructions executable by the processor; and when the processor is configured to execute the instructions, the electronic device is enabled to implement the method according to any one of claims 1 to 15.

17. A computer-readable storage medium, wherein the computer-readable storage medium stores computer program instructions; and
when the computer program instructions are executed by an electronic device, the electronic device is enabled to implement the method according to any one of claims 1 to 15.
